# EUROPEAN PATENT SPECIFICATION

(11) **EP 4 383 967 B1**
(45) Date of publication and mention of the grant of the patent: **28.01.2026**
(21) Application number: 21957874.7
(22) Date of filing: 24.09.2021
(51) Int. Cl.: H05K 7/20, G06F 1/18, G06F 1/20

(54) **MACHINE BOX, ENERGY STORAGE SYSTEM AND DATA SYSTEM**
MASCHINENKASTEN, ENERGIESPEICHERSYSTEM UND DATENSYSTEM
BOÎTE DE MACHINE, SYSTÈME DE STOCKAGE D'ÉNERGIE ET SYSTÈME DE DONNÉES

(43) Date of publication of application: 12.06.2024
(73) Proprietor: Huawei Digital Power Technologies Co., Ltd., Shenzhen, Guangdong 518043 (CN)
(72) Inventor: ZOU, Henglong, Shenzhen, Guangdong 518129 (CN); SONG, Jinliang, Shenzhen, Guangdong 518129 (CN); ZHOU, Kui, Shenzhen, Guangdong 518129 (CN); YUAN, Zhi, Shenzhen, Guangdong 518129 (CN)
(74) Representative: Epping - Hermann - Fischer
(86) International application number: PCT/CN2021/120271
(87) International publication number: WO 2023/044740

(56) References cited:
- CN-A- 103 717 033
- CN-A- 105 658 033
- CN-A- 109 788 725
- CN-U- 204 795 998
- CN-U- 208 985 100
- US-A1- 2013 219 947
- US-A1- 2017 280 593
- US-A1- 2017 325 354
- US-B2- 8 701 429

## Description

### TECHNICAL FIELD

This application relates to the field of chassis technologies, and in particular, to a chassis, an energy storage system, and a data system.

### BACKGROUND

Air conditioners are widely used in life and industry to perform heat exchange indoors. In industry, for example, the air conditioner is applied to an energy storage container. The energy storage container is an important device for photovoltaic energy storage. The energy storage container has a large quantity of batteries. As the batteries are stacked, capacity and charge/discharge ratio increase. How to efficiently control a battery temperature rise is the key to chassis system temperature control. Low costs of a temperature control system for the entire chassis are core competitiveness of a product. Currently, an integrated air conditioner is generally mounted on both sides of the chassis. The air conditioner delivers cooled air to cool the batteries. In this architecture design for temperature control, electric apparatuses of the chassis are at different distances from the air conditioner, and an electric apparatus away from the air conditioner has poor heat dissipation effect due to insufficient air supply from the air conditioner. Therefore, temperatures of electrochemical cells rise, and this causes a short battery lifespan. For the entire temperature control system, an internal air circulation path of the air conditioner is long, and air resistance is high. This causes low temperature control efficiency.

US2013/219947A1 discloses a heat-exchanged cabinet structure which is used to accommodate an electronic equipment. The heat-exchanged cabinet structure includes a main body, a first heat exchanger device and a second heat exchanger device. The main body has an accommodated space and a first housing. The electronic equipment is disposed in the accommodated space. The first heat exchanger device which has a condenser is disposed on the first housing and placed in the accommodated space. The second heat exchanger device which has an evaporator is placed in the accommodated space and is adjacent the first heat exchanger.US2017/325354A1 discloses a rack mount server system, which has no damage to computation equipment even if a disorder occurs in a cooling device, which is easy to maintain, minimize power consumption, which has a simple structure, and which performs an efficient cooling, and a control method thereof. The system comprises: a rack housing; and a cooling zone which is placed in the rack housing, which stores a server, and which is forcibly cooled. The rack housing comprises a heat exchanger and an evaporator, which cool the cooling zone.

US8701429B2 discloses a supplementary air conditioning system includes an indoor heat exchanger and an outdoor heat exchanger. The indoor heat exchanger is fanless and includes indoor tubes installed so as to be inclined to a ceiling of a room. The indoor tubes make diagonal contact with a high-temperature air zone in an upper part of the room and refrigerant inside the indoor tubes is heated by the air zone so as to boil and vaporize and air in the air zone flows down through the indoor heat exchanger. The external heat exchanger includes outdoor tubes installed outside at a higher position than the indoor tubes and are connected to the indoor tubes via connecting pipes with no compressor therebetween. The outdoor tubes condense and liquefy the refrigerant boiled and vaporized in the indoor tubes and return the refrigerant to the indoor tubes.

### SUMMARY

This application provides a chassis with good heat dissipation effect.

According to a first aspect, this application provides a chassis according to claim 1.

The fan is a structural component of the electric apparatus, and is configured to dissipate heat from a component in internal space of the electric apparatus.

The electric apparatus includes an electric component. In the chassis, when the electric apparatus works, the electric component is a main heat source that generates heat in the electric apparatus. The fan in the electric apparatus is configured to dissipate heat from the electric component. The fan can blow a gas to flow over a surface of the electric component to dissipate heat from an electrochemical cell.

In this application, the fan of the electric apparatus is used to implement air circulation between the internal space of the electric apparatus and the accommodation cavity, without disposing an additional fan. In this way, costs are saved and space of the accommodation cavity is saved. In addition, the first heat exchanger is disposed close to the first air vent of the electric apparatus, so that the first heat exchanger can perform the heat exchange on the electric apparatus timely. In this way, heat exchange effect for the electric apparatus is improved, and heat exchange efficiency of the heat control apparatus for the electric apparatus is improved.

In an implementation, the chassis is an energy storage container. The electric apparatus is a battery module. The electric component is an electrochemical cell. The battery module generates a large amount of heat when working, and the fan is configured to dissipate heat from the electrochemical cell. In some implementations, the chassis may be a data center. The data center may be a small data center such as a cabinet, or may be a large data center such as a data equipment room. In some implementations, when the chassis is the cabinet, the electric apparatus is a server, and the electric component is an electronic component in the server. The server generates a large amount of heat when working, and the fan is configured to dissipate heat from the electronic component in the server. In another implementation, the chassis may also be another device that requires heat exchange.

The speed at which the air flow flows between the first air vent and the second air vent includes a speed at which the air flow flows from the first air vent to the second air vent through the internal space of the electric apparatus, or a speed at which the air flow flows from the first air vent to the second air vent through the accommodation cavity. Acceleration of the speed at which the air flow flows in the internal space of the electric apparatus accelerates the speed at which the air flow flows in the accommodation cavity outside the electric apparatus.

When the fan works, air is driven to circulate between the first air vent, the internal space of the electric apparatus, the second air vent, and the accommodation cavity. The first air vent, the internal space of the electric apparatus, the second air vent, and the accommodation cavity form an air flow circulation channel. The fan is located in the air flow circulation channel. In an implementation, the fan drives the air to flow from the first air vent to the internal space of the electric apparatus, and then flow from the second air vent to the accommodation cavity. The fan then draws the air from the accommodation cavity and delivers the air to the first air vent. In this way, the air flow circulation channel is formed. In an implementation, the first air vent is an air inlet of the electric apparatus, and the second air vent is an air outlet of the electric apparatus.

In an implementation, the first air vent is an air outlet of the electric apparatus, and the second air vent is an air inlet of the electric apparatus. The fan drives the air to flow from the second air vent to the internal space of the electric apparatus, then flow from the internal space of the electric apparatus to the first air vent, and flow out from the first air vent to the accommodation cavity. The fan then draws the air from the accommodation cavity, so that the air enters the internal space of the electric apparatus from the second air vent. In this way, the air flow circulation channel is formed. In this application, the air flow circulation channel is formed by using the fan of the electric apparatus, without disposing the additional fan. In this way, the costs can be reduced, other positions in the accommodation cavity are not occupied, and the internal space of the accommodation cavity is saved.

The first heat exchanger and the second heat exchanger are components that can conduct heat, and may be air-liquid heat exchangers. The heat exchange working substance can change from a first state to a second state when absorbing plenty of heat, and can change from the second state to the first state when releasing the heat, to implement the thermodynamic cycle. For example, the heat exchange working substance changes from a liquid state to a gas state when absorbing plenty of heat, and changes from the gas state to the liquid state when releasing plenty of heat. The heat exchange working substance is a refrigerant, such as water, glycol, acetone, or methanol.

In an implementation, when the internal of the electric apparatus needs to be cooled, heat generated by the electric apparatus during working passes through the air flow circulation channel, to heat up air in the accommodation cavity. The first heat exchanger located in the accommodation cavity absorbs heat of the air in the accommodation cavity, and transfers the heat to the heat exchange working substance in the first heat exchanger. The heat exchange working substance absorbs the heat, and then is heated up to vaporize into a gas. The gaseous heat exchange working substance flows to the second heat exchanger. The second heat exchanger is configured to transfer the heat of the gaseous heat exchange working substance outside the chassis housing. In this way, an internal-to-external heat exchange process of transferring the heat inside the chassis housing to the external of the chassis housing is implemented.

In an implementation, when the internal of the electric apparatus needs to be heated up, for example, when the chassis is located in a very cold region, the internal of the electric apparatus is at a low temperature and cannot reach a normal working temperature of the electric apparatus. The electric apparatus needs to be heated up, so that the electric apparatus can work normally. The second heat exchanger heats up the heat exchange working substance in the second heat exchanger. The heated heat exchange working substance flows to the first heat exchanger. The first heat exchanger transfers heat of the heat exchange working substance to the air in the accommodation cavity. The heated air in the accommodation cavity passes through the air flow circulation channel to heat up the electric apparatus. In this way, an external-to-internal heat exchange process of transferring the heat outside the chassis housing to the internal of the chassis housing is implemented.

The first heat exchanger and the second heat exchanger implement the internal-to-external heat exchange process and the external-to-internal heat exchange process by using the thermodynamic cycle of the heat exchange working substance. The first heat exchanger is located in the accommodation cavity, and is configured to implement the heat exchange between the air in the accommodation cavity and the heat exchange working substance in the first heat exchanger. The heat exchange working substance can flow from the first heat exchanger to the second heat exchanger. The second heat exchanger may be disposed at any position, provided that the heat exchange between the heat exchange working substance in the second heat exchanger and the external of the chassis housing can be implemented. The chassis housing includes a top cover and a bottom plate that are disposed opposite to each other in a first direction. The second heat exchanger is located in the top cover of the chassis housing. The first direction is a height direction of the chassis. In some implementations, the second heat exchanger is located on a side surface of the chassis housing. In this application, the first heat exchanger is disposed close to the first air vent, so that the flowing air that enters the internal space of the electric apparatus from the first air vent passes the first heat exchanger, or the flowing air in the internal space of the electric apparatus passes the first heat exchanger after being discharged from the first air vent. In this way, the air in the internal space of the electric apparatus can exchange heat with the first heat exchanger timely. This improves the heat exchange efficiency for the electric apparatus. For example, when heat dissipation and cooling need to be performed on the electric apparatus, it is assumed that the first air vent is the air inlet. The electric apparatus works and generates heat. The fan works to drive the cold air cooled by the first heat exchanger to quickly enter the internal space of the electric apparatus from the first air vent, to cool the electric apparatus timely. In this way, a deliver distance of the cold air from the first heat exchanger to the internal space of the electric apparatus is shortened, a cold loss is reduced, and cooling effect for the electric apparatus is improved. The electric apparatus is the heat source that generates heat. The first heat exchanger is a cooling source that cools the electric apparatus. The heat source (the electric apparatus) and the cooling source (the first heat exchanger) are disposed adjacently, to achieve good heat exchange effect, and improve the heat dissipation efficiency for the electric apparatus.

The fan is a fan of the electric apparatus, and is generally disposed inside the electric apparatus. Alternatively, fans are disposed in the first air vent and the second air vent of the electric apparatus. In other words, the fan is at a short distance from the first air vent, and a flow volume and a flow rate of the air flowing through the first air vent are the largest. When the air with the large flow volume and the large flow rate passes the first heat exchanger, a large volume of air exchanges heat with the first heat exchanger over a unit of time. This improves the heat exchange efficiency. If the fan is disposed away from the electric apparatus, in terms of an air volume, the air driven by the fan disperses in the accommodation cavity, and a volume and a speed of air reaching the first heat exchanger are reduced. This causes reduced heat exchange efficiency of the first heat exchanger.

In an implementation, the first heat exchanger may include the first heat exchange pipe. In an implementation, the first heat exchanger may include the first heat exchange pipe and a thermal pad. The first heat exchange pipe passes through the thermal pad. The thermal pad is configured to increase an area of air contact for the heat exchange. The first heat exchanger may alternatively be another structural component. For example, when the first heat exchanger is configured to cool the air, the first heat exchanger may be an evaporator.

In the invention, the electric apparatus includes a compartment housing and an electric component located in the compartment housing. The compartment housing includes the first air vent and the second air vent. The fan is located at at least one of the following positions: the first air vent, the second air vent, and internal space of the compartment housing.

The compartment housing is a housing configured to accommodate the electric component, and the electric component in the compartment housing is the electric component of the electric apparatus. The compartment housing and the electric component located in the compartment housing form an electric compartment. In an implementation, the electric apparatus is a battery module, and the compartment housing is a housing configured to accommodate an electrochemical cell. In an implementation, the electric apparatus is a server, and the compartment housing is a housing configured to accommodate an electronic component. In an implementation, the electric apparatus is the battery module, and the compartment housing and the electrochemical cell located in the compartment housing form a battery compartment.

In an implementation, the first air vent and the second air vent are disposed opposite to each other in a second direction. The second direction intersects the first direction. The first air vent is the air inlet, and the second air vent is the air outlet. The fan is located at the first air vent, so that air that exchanges heat with the first heat exchanger is directly blown into the internal space of the compartment housing from the first air vent, to exchange heat with the electric component. In this way, the heat exchange efficiency is improved. In some implementations, the first air vent is the air outlet, and the second air vent is the air inlet. Air from the internal space of the compartment housing directly exchanges heat with the first heat exchanger after being discharged from the first air vent.

In an implementation, the fan may alternatively be located in the internal space of the compartment housing. The internal space of the compartment housing is the internal space of the electric apparatus. The fan may be located at any position of the compartment housing. Specifically, the fan may be disposed based on an arrangement manner of the electric component, to properly arrange the fan and the electric component, and ensure a ventilation volume and a quantity of electric components. In an implementation, the fan may be located at the second air vent. In an implementation, there are two fans. The two fans are respectively located at the first air vent and the second air vent. That the fan is located at the first air vent includes that the fan is fastened to a side that is of the first air vent and that faces the internal space of the compartment housing, that the fan is fastened to a side that is of the first air vent and that is away from the internal space of the compartment housing, or that the fan is fastened to the compartment housing around the first air vent. That the fan is located at the second air vent includes that the fan is fastened to a side that is of the second air vent and that faces the internal space of the compartment housing, that the fan is fastened to a side that is of the second air vent and that is away from the internal space of the compartment housing, or that the fan is fastened to the compartment housing around the second air vent.

In an implementation, the electric apparatus includes a plurality of fans. The plurality of fans are respectively located at the first air vent and the second air vent. In an implementation, the plurality of fans are respectively located at the first air vent and in the internal space of the compartment housing. In an implementation, the plurality of fans are respectively located at the second air vent and in the internal space of the compartment housing. In an implementation, the plurality of fans are respectively located at the first air vent, at the second air vent, and in the internal space of the compartment housing. The manner of disposing the plurality of fans can improve the speed at which the air flows. In an implementation, when the heat control apparatus is configured to cool the electric compartment, the fan drives the air cooled by the first heat exchanger to flow from the first air vent to the internal space of the compartment housing, to cool the electric component. The air is heated up, and the heated air flows from the second air vent to the accommodation cavity. The air returns to the first air vent through the air flow circulation channel to be cooled by the first heat exchanger. The cooled air enters the internal space of the compartment housing for another time. This can effectively improve the cooling efficiency for the electric component in the compartment housing.

In some implementations, the heat control apparatus may be configured to heat the electric compartment. A specific heating process is similar to the foregoing heating process. Details are not described herein again.

In an implementation, the chassis housing includes a first side panel. The first air vent faces the first side panel. The first heat exchanger is located between the first side panel and the first air vent, and is fastened to an inner surface that is of the first side panel and that faces the electric apparatus. The first heat exchanger is mounted on the first side panel, to facilitate maintenance of the first heat exchanger and the electric apparatus. The first heat exchanger can be maintained provided that the first side panel is opened.

In an implementation, the first heat exchanger may alternatively be fastened to an outer side of the electric apparatus. The chassis housing includes the first side panel. The first side panel is located on a side of the electric apparatus in the second direction. The first air vent and the second air vent are disposed opposite to each other in the second direction. The first side panel is disposed closer to the second air vent than to the first air vent. The first heat exchanger is fastened to the outer side of the electric apparatus.

In some implementations, a plurality of first heat exchangers may be further disposed on other sides of the electric apparatus, to improve heat exchange effect for the electric apparatus.

In the invention, the electric apparatus includes a plurality of compartment housings that are stacked. In each compartment housing, the first heat exchanger is disposed on an outer side of the first air vent, and at least a part of the first heat exchanger is opposite to the first air vent. In an implementation, the chassis housing further includes the top cover and the bottom plate that are disposed opposite to each other in the first direction. The electric apparatus is located in a region between the top cover and the bottom plate. A direction in which the plurality of compartment housings are stacked is the first direction. The first heat exchanger extends in the first direction. Therefore, there is a part of the first heat exchanger at the first air vent of each compartment housing, to dissipate heat from each electric compartment. This achieves uniform heat dissipation. In an implementation, the first direction is a height direction of the chassis housing, and the second direction is a width direction of the chassis housing.

In an implementation, a part of the first heat exchanger is disposed at the first air vent of each compartment housing. When the electric apparatus is cooled, the heat exchange working substance in the first heat exchanger is liquid. The liquid changes into the gas after absorbing heat. Heat absorbed by the liquid heat exchange working substance at different positions in the first heat exchanger to change from the liquid to the gas differs slightly. In an implementation, more liquid heat exchange working substance may be disposed in the first heat exchanger, so that the liquid heat exchange working substance can flow to any part of the first heat exchanger, or the liquid heat exchange working substance can at least flow to a part that is of the first heat exchanger and that is close to the first air vent of each compartment housing. In this way, the part that is of the first heat exchanger and that is close to the first air vent of each compartment housing achieves same heat absorption effect. This improves heat dissipation uniformity for electric compartments in the electric apparatus.

In an implementation, the electric apparatus includes an electric support. A plurality of electric compartments are disposed on the electric support. In some implementations, the plurality of electric compartments may be directly stacked in the first direction.

In some possible implementations, the electric apparatus includes an apparatus housing and the electric component located in the apparatus housing. The apparatus housing includes the first air vent and the second air vent. The fan is located at at least one of the following positions: the first air vent, internal space of the apparatus housing, or the second air vent. In a possible implementation, the electric apparatus is the battery module. The battery module includes a module housing and an electrochemical cell located in the module housing. The electrochemical cell is directly disposed in the module housing. The module housing includes the first air vent and the second air vent. The fan is located at at least one of the following positions: the first air vent, the internal space of the apparatus housing, or the second air vent.

The first air vent and the second air vent are respectively disposed on housings that are of the apparatus housing and that are disposed opposite to each other in the second direction. The fan may be fastened to the apparatus housing through snap-fitting or by using a screw. A specific manner is not limited. In an implementation, when the electric apparatus includes a plurality of electric components arranged in the first direction, the plurality of electric components may be arranged on the support in the first direction or stacked in the first direction. A plurality of first air vents, a plurality of second air vents, and a plurality of fans are disposed on the housings on two sides of the apparatus housing in the second direction. In this way, each electric component has the first air vent and the second air vent respectively on two sides in the second direction, and has the fan for blowing air right towards the electric component.

In a possible implementation, the chassis includes a plurality of electric apparatuses arranged in a row. The heat control apparatus includes a plurality of first heat exchangers. One first heat exchanger is disposed at the first air vent of each of the plurality of electric apparatuses. A direction in which the plurality of electric apparatuses are arranged is a third direction, and the third direction intersects with both the second direction and the first direction. In an implementation, the first direction is the height direction of the chassis housing, the second direction is the width direction of the chassis housing, and the third direction is a length direction of the chassis housing.

In an implementation, there are the plurality of electric apparatuses. The electric apparatus has a plurality of electric compartments. When the first heat exchangers are configured to cool the plurality of electric apparatuses, a part of the first heat exchanger is disposed at the first air vent of each electric compartment in each electric apparatus. In this way, heat dissipation effect can be improved for each electric compartment, and the heat dissipation uniformity for all electric apparatuses can be improved. In an implementation, a quantity of electric apparatuses arranged in the third direction is not limited. When there are a large quantity of electric apparatuses, good heat dissipation uniformity is still achieved. When the first heat exchangers are configured to heat the plurality of electric apparatuses, good heating uniformity is achieved.

In an implementation, when there are the plurality of first heat exchangers, the heat control apparatus may include one second heat exchanger or a plurality of second heat exchangers. When there is only one second heat exchanger, the second heat exchanger communicates with the plurality of first heat exchangers, and is configured to perform the heat exchange on the heat exchange working substance in the plurality of first heat exchangers. When there are a plurality of second heat exchangers, the second heat exchangers may respectively communicate with the plurality of first heat exchangers, and perform the heat exchange respectively on the heat exchange working substance in the plurality of first heat exchangers. This may be specifically set based on an actual requirement.

In some implementations, the chassis housing includes the plurality of electric apparatuses arranged in the second direction. One first heat exchanger is disposed on an outer side of each of the electric apparatuses. The first heat exchanger may be adaptively increased based on a quantity or distribution positions of the electric apparatuses. The plurality of first heat exchangers are distributed, and may dissipate heat from each electric apparatus. This improves heat dissipation effect.

In an implementation, two electric apparatuses are arranged in the second direction. First air vents at which the two electric apparatuses are arranged in the second direction are respectively close to the first side panel and a second side panel on two sides.

In an implementation, two electric apparatuses are arranged in the second direction. First air vents at which the two electric apparatuses are arranged in the second direction are respectively away from the first side panel and a second side panel on two sides.

In some implementations, more than two electric apparatuses are arranged in the second direction. In this case, a first heat exchanger of an electric apparatus located between another electric apparatus and yet another electric apparatus may be fastened to the electric apparatus.

In a possible implementation, the heat control apparatus further includes an air guide housing. The air guide housing and the first heat exchanger are located on a same side of the electric apparatus in the second direction. The air guide housing and the first heat exchanger extend in the first direction. The second direction intersects the first direction. The first heat exchanger is located in the air guide housing. A third air vent and a fourth air vent are disposed on the air guide housing. The third air vent is disposed closer to the first air vent than the fourth air vent. The third air vent and the first air vent are configured to communicate internal space of the air guide housing with the internal space of the electric apparatus. The fourth air vent is configured to communicate the internal space of the air guide housing with the accommodation cavity.

The third air vent and the fourth air vent are located in the air flow circulation channel. When the first air vent is the air outlet of the electric apparatus, and the second air vent is the air inlet of the electric apparatus, the third air vent is an air inlet of the air guide housing, and the fourth air vent is an air outlet of the air guide housing. Air coming out from the first air vent passes through the third air vent and enters the internal space of the air guide housing, and is cooled by the first heat exchanger. The air guide housing allows the air to temporarily stay in an accommodation hole of the air guide housing, so that the air is in contact with the first heat exchanger for long time. In this way, the heat exchange can be implemented adequately.

In an implementation, a central axis of the third air vent overlaps a central axis of the first air vent, so that the air flows more smoothly between the first air vent and the third air vent.

In an implementation, the air guide housing includes a first side plate, a second side plate, a third side plate, and a fourth side plate. The first side plate and the second side plate are disposed opposite to each other in the second direction. The third side plate and the fourth side plate are disposed opposite to each other in the third direction. The first side plate, the third side plate, the second side plate, and the fourth side plate are sequentially connected to form the air guide housing. The first side plate is disposed close to the first air vent. The third air vent is disposed on the first side plate. Fourth air vents are disposed on both the third side plate and the fourth side plate. Air coming from the third air vent may be divided into two air flows and discharged from the fourth air vents on the third side plate and the fourth side plate respectively.

In an implementation, the chassis housing further includes the top cover and the bottom plate that are disposed opposite to each other in the first direction. The air guide housing is located between the top cover and the bottom plate. The air guide housing includes the third air vent and the fourth air vent. A maximum vertical distance between an edge of the third air vent and the bottom plate is greater than a minimum vertical distance between an edge of the fourth air vent and the bottom plate, and is less than or equal to a maximum vertical distance between an edge of the fourth air vent and the bottom plate. In this way, the air can flow from the third air vent to the fourth air vent, or flow from the fourth air vent to the third air vent, to ensure adequate heat exchange and improve a circulation speed of the air. The first direction is a direction perpendicular to the bottom plate.

In an implementation, the maximum vertical distance between the edge of the fourth air vent and the bottom plate is greater than a minimum vertical distance between an edge of the third air vent and the bottom plate, and is less than or equal to the maximum vertical distance between the edge of the third air vent and the bottom plate. The first direction is the direction perpendicular to the bottom plate.

In an implementation, the vertical distance between the upper edge of the third air vent and the bottom plate, and the vertical distance between the lower edge of the third air vent and the bottom plate are respectively equal to the vertical distance between the upper edge of the fourth air vent and the bottom plate, and the vertical distance between the lower edge of the fourth air vent and the bottom plate. Specifically, the maximum vertical distance between the edge of the third air vent and the bottom plate is equal to the maximum vertical distance between the edge of the fourth air vent and the bottom plate. The minimum vertical distance between the edge of the third air vent and the bottom plate is equal to the minimum vertical distance between the edge of the fourth air vent and the bottom plate.

In an implementation, there are two fourth air vents. In an implementation, there are three fourth air vents.

In an implementation, the third air vent and the fourth air vent are in shapes of rectangles, and length directions of the rectangles are the same as the first direction. In an implementation, the third air vent and the fourth air vent are in shapes of squares. In an implementation, the third air vent and the fourth air vent are in shapes of ellipses, and the like. In an implementation, when there are two or more fourth air vents, maximum vertical distances between upper edges of the fourth air vents and the bottom plate may be the same or different. Minimum vertical distances between lower edges of the fourth air vents and the bottom plate may be the same or different. Shapes of the fourth air vents may be the same or different.

In an implementation, when the electric apparatus includes the plurality of compartment housings, a plurality of third air vents are disposed on the air guide housing. Each of the third air vents is disposed opposite to the first air vent of one of the compartment housings, and at least one of the fourth air vents and one of the third air vents meet the foregoing vertical distance relationship. In an implementation, one third air vent and one fourth air vent that correspond to each compartment housing are disposed on the air guide housing.

In an implementation, a water pan and a water pump are disposed at the bottom of the air guide housing. The water pan is configured to collect water drops condensed on the first heat exchanger. The water pump discharges water in the water pan out of the chassis housing.

In a possible implementation, the chassis housing further includes the top cover and the bottom plate that are disposed opposite to each other in the first direction. The electric apparatus is located on the bottom plate. Accommodation space is disposed in the top cover, and the second heat exchanger is located in the accommodation space. The second heat exchanger is disposed in the top cover to save space. The bottom plate has a plurality of fastened support posts. A guide rail is disposed on the fastened support posts. The electric apparatus is located on the guide rail. When there are the plurality of electric apparatuses, there are the plurality of first heat exchangers and the plurality of second heat exchangers. The plurality of second heat exchangers are compactly disposed in the top cover, to reduce a size of the chassis. In another implementation, the second heat exchanger may alternatively be disposed on a side housing body of the chassis housing or disposed outside the chassis housing.

In an implementation, an inlet and an outlet of the first heat exchanger are located at an end that is of the first heat exchanger and that is close to the top cover. There may be a plurality of "S"-shaped loops between the inlet and the outlet of the first heat exchanger. Alternatively, there is a "U"-shaped loop between the inlet and the outlet.

When there is the "U"-shaped loop between the inlet and the outlet, the heat exchange uniformity for the electric apparatus can be improved.

When there are the plurality of "S"-shaped loops between the inlet and the outlet, the plurality of "S"-shaped loops are equivalent to a plurality of "U"-shaped loops, and the heat dissipation uniformity of the first heat exchanger for upper and lower parts of the electric apparatus can also be improved.

In a possible implementation, the duct further includes a first communicating pipe and a second communicating pipe. The first communicating pipe is connected between the inlet of the first heat exchanger and an outlet of the second heat exchanger, and communicates with both the first heat exchanger and the second heat exchanger. The second communicating pipe is connected between the outlet of the first heat exchanger and an inlet of the second heat exchanger, and communicates with both the first heat exchanger and the second heat exchanger. When the first heat exchanger is disposed on the first side panel, the first side panel can be smoothly opened by using the first communicating pipe and the second communicating pipe. In an implementation, the first communicating pipe and the second communicating pipe are communicating pipes that are elastic and that can stretch out and draw back, or the first communicating pipe and the second communicating pipe are of specific lengths, so that the first side panel can be opened more smoothly.

In an implementation, the second heat exchanger includes the second heat exchange pipe, a compressor, an expansion valve, a heat exchange component, and an outdoor unit fan. The compressor, the heat exchange component, and the expansion valve are sequentially connected between the inlet of the first heat exchanger and the outlet of the first heat exchanger. There is a part of the second heat exchange pipe between the compressor and the heat exchange component. There is a part of the second heat exchange pipe between the heat exchange component and the expansion valve. The compressor, the heat exchange component, and the expansion valve communicate with the second heat exchange pipe. The heat exchange working substance flows in the second heat exchange pipe, the compressor, the expansion valve, and the heat exchange component. The outdoor unit fan is configured to drive external circulation between internal space of the top cover and the external of a chassis housing. The top cover includes an air inlet and an air outlet. After the outdoor unit fan drives external air to enter from the air inlet, the external air exchanges heat with the heat exchange component. Then, the external air is discharged from the top cover through the air outlet. In this way, the external circulation between the internal space of the top cover and the external of the chassis housing is implemented.

When the heat exchange component is a condenser, the condenser is configured to cool the heat exchange working substance in the second heat exchange pipe. When the heat control apparatus cools the electric apparatus, the heat exchange working substance in the first heat exchanger is low-pressure and low-temperature liquid. The low-pressure and low-temperature liquid has a low boiling point and can absorb heat quickly. The fan in the electric apparatus drives the internal hot air to flow from the first air vent to a surface of the first heat exchanger. The low-pressure and low-temperature liquid heat exchange working substance absorbs heat of the hot air and becomes the low-pressure and low-temperature gaseous heat exchange working substance. The low-pressure and low-temperature gaseous heat exchange working substance flows from the outlet of the first heat exchanger to the second heat exchange pipe, and then flows to the compressor. The compressor converts the low-pressure and low-temperature gaseous heat exchange working substance into the high-temperature and high-pressure gaseous heat exchange working substance. Then, the high-temperature and high-pressure gaseous heat exchange working substance flows into the heat exchange component (the condenser) through the part of the second heat exchange pipe. The high-temperature and high-pressure gaseous heat exchange working substance may be a gas with a temperature and pressure that are higher than those of external air. In this case, the outdoor unit fan may be used to drive the external air to cool the high-temperature and high-pressure gaseous heat exchange working substance in the heat exchange component (the condenser). The high-temperature and high-pressure gaseous heat exchange working substance is cooled by the heat exchange component (the condenser) to form the moderate-temperature and high-pressure liquid heat exchange working substance. Then, the moderate-temperature and high-pressure liquid heat exchange working substance enters the expansion valve through the part of the second heat exchange pipe, and passes through the expansion valve to form the low-temperature and low-pressure liquid heat exchange working substance. The low-temperature and low-pressure liquid heat exchange working substance flows back to the first heat exchanger, to continue to cool the electric apparatus.

The second heat exchanger performs the heat exchange on the heat exchange working substance in the first heat exchanger, so that the heat exchange working substance forms a thermodynamic cycle between the first heat exchanger and the second heat exchanger. In an implementation, the second heat exchanger has the compressor and the expansion valve, so that a temperature of the heat exchange working substance can be reduced low. When the low-temperature heat exchange working substance exchanges heat with air in the air flow circulation channel by using the first heat exchanger to cool the electric apparatus, this enables a temperature of the electric apparatus to be lower than a temperature outside the chassis housing. In this way, cooling effect for the electric apparatus is improved. When the heat control apparatus is used to heat up the electric apparatus, the second heat exchanger in an implementation may also be used to enable the temperature of the electric apparatus to be higher than the temperature outside the chassis housing. In this way, temperature raising effect for the electric apparatus is improved.

In another implementation, the second heat exchanger may further include another component, for example, an air filter, and the like. The second heat exchanger may also be formed of another structure, provided that the heat exchange can be performed on the heat exchange working substance in the first heat exchanger.

According to a second aspect, this application further provides an energy storage system. The energy storage system includes a power generation component and the chassis according to any one of the foregoing items. The chassis is the energy storage container. The power generation component is configured to generate electric energy, and the electric energy is stored in the chassis. The power generation component includes but is not limited to a solar power generation apparatus, a wind power generation apparatus, or a hydroelectric power generation apparatus.

According to a third aspect, this application further provides a data system. The data system includes a power supply component and the chassis according to any one of the foregoing items. The chassis is the data center or the cabinet, and the power supply component is configured to provide electric energy for the chassis.

### BRIEF DESCRIPTION OF DRAWINGS

FIG. 1 is a schematic diagram of a three-dimensional structure of a chassis according to an implementation of this application;
FIG. 2 is a schematic diagram of a structure of a chassis according to an implementation of this application;
FIG. 3 is a schematic diagram of a structure of a chassis according to an implementation of this application;
FIG. 4a is a schematic diagram of a structure of a chassis according to an implementation of this application;
FIG. 4b is a schematic diagram of a structure of a chassis according to an implementation of this application;
FIG. 5 is a schematic diagram of a structure in which an integrated air conditioner is used to dissipate heat from an electric apparatus;
FIG. 6 is a schematic diagram of a structure in which a split-type air conditioner is used to dissipate heat from an electric apparatus;
FIG. 7 is a schematic diagram of a structure of a chassis according to an implementation of this application;
FIG. 8 is a schematic diagram of a structure of a chassis according to an implementation of this application;
FIG. 9a is a schematic diagram of a structure of a chassis according to an implementation of this application;
FIG. 9b is a schematic diagram of a structure of an electric apparatus in a chassis according to an implementation of this application;
FIG. 9c is a schematic diagram of a structure of an electric apparatus in a chassis according to an implementation of this application;
FIG. 9d is a schematic diagram of a structure of an electric apparatus in a chassis according to an implementation of this application;
FIG. 9e is a schematic diagram of a structure of an electric apparatus in a chassis according to an implementation of this application;
FIG. 9f is a schematic diagram of a structure of an electric apparatus in a chassis according to an implementation of this application;
FIG. 9g is a schematic diagram of a structure of an electric apparatus in a chassis according to an implementation of this application;
FIG. 9h is a schematic diagram of a structure of an electric apparatus in a chassis according to an implementation of this application;
FIG. 9i is a schematic diagram of a structure of an electric apparatus in a chassis according to an implementation of this application;
FIG. 9j is a schematic diagram of a structure of an electric apparatus in a chassis according to an implementation of this application;
FIG. 10 is a schematic diagram of a structure of a chassis according to an implementation of this application;
FIG. 11 is a schematic diagram of a structure in which an integrated air conditioner is used to dissipate heat from an electric apparatus;
FIG. 12 is a schematic diagram of a structure of an electric apparatus in a chassis according to an implementation of this application;
FIG. 13 is a schematic diagram of a structure of an electric apparatus in a chassis according to an implementation of this application;
FIG. 14 is a schematic diagram of a structure of a chassis according to an implementation of this application;
FIG. 15 is a schematic diagram of a structure in which an integrated air conditioner is used to dissipate heat from an electric apparatus;
FIG. 16 is a schematic diagram of a structure of a chassis according to an implementation of this application;
FIG. 17a is a schematic diagram of a structure of a chassis according to an implementation of this application;
FIG. 17b is a schematic diagram of positions of an air guide housing and a bottom plate in a chassis according to an implementation of this application;
FIG. 17c is a schematic diagram of positions of an unfolded air guide housing and a bottom plate in a chassis according to an implementation of this application;
FIG. 17d is a schematic diagram of positions of an air guide housing and a bottom plate in a chassis according to an implementation of this application;
FIG. 17e is a schematic diagram of positions of an unfolded air guide housing and a bottom plate in a chassis according to an implementation of this application;
FIG. 17f is a schematic diagram of positions of an unfolded air guide housing and a bottom plate in a chassis according to an implementation of this application;
FIG. 17g is a schematic diagram of positions of an unfolded air guide housing and a bottom plate in a chassis according to an implementation of this application;
FIG. 17h is a schematic diagram of positions of an unfolded air guide housing and a bottom plate in a chassis according to an implementation of this application;
FIG. 17i is a schematic diagram of positions of an unfolded air guide housing and a bottom plate in a chassis according to an implementation of this application;
FIG. 17j is a schematic diagram of positions of an unfolded air guide housing and a bottom plate in a chassis according to an implementation of this application;
FIG. 17k is a schematic diagram of positions of an air guide housing and an electric apparatus in a chassis according to an implementation of this application;
FIG. 18 is a schematic diagram of a structure of a chassis according to an implementation of this application;
FIG. 19 is a schematic diagram of a structure of parts of a first heat exchanger and an electric apparatus in a chassis according to an implementation of this application;
FIG. 20 is a schematic diagram of a structure of an energy storage system according to an implementation of this application; and
FIG. 21 is a schematic diagram of a structure of a data system according to an implementation of this application.

### DESCRIPTION OF EMBODIMENTS

The terms "first", "second", and the like in this specification are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of this application, unless otherwise stated, "a plurality of" means two or more than two.

In addition, in this specification, orientation terms such as "up" and "down" are defined with respect to orientations of schematically placed structures in the accompanying drawings. It should be understood that these orientation terms are relative concepts and are used for relative description and clarification. The orientation terms may vary correspondingly based on a change in an orientation in which the structure is placed.

For ease of understanding, the following first explains and describes related technical terms in embodiments of this application.

A heat loss is heat transferred to the outside.

A cold loss is heat absorbed from the outside.

A thermodynamic cycle means that in a thermodynamic process, a system undergoes a series of processes and then returns to an initial status from the initial status, in other words, a final status of the system is the same as the initial status.

An air-liquid heat exchanger is an apparatus for heat exchange between air and a refrigerant.

A compressor is a powered fluid machine that increases pressure of a gas from low-pressure to high-pressure, and is the heart of a cooling system. The compressor draws a low-temperature and low-pressure gas refrigerant, and compresses the gas refrigerant by using a piston driven by an operating motor. The high-temperature and high-pressure gas refrigerant is discharged to an exhaust pipe, to provide power for a cooling cycle.

An expansion valve restricts a flow of a moderate-temperature and high-pressure liquid refrigerant that passes through the expansion valve, to change the moderate-temperature and high-pressure liquid refrigerant to low-temperature and low-pressure wet vapor. Then, the refrigerant absorbs heat in an evaporator to achieve cooling.

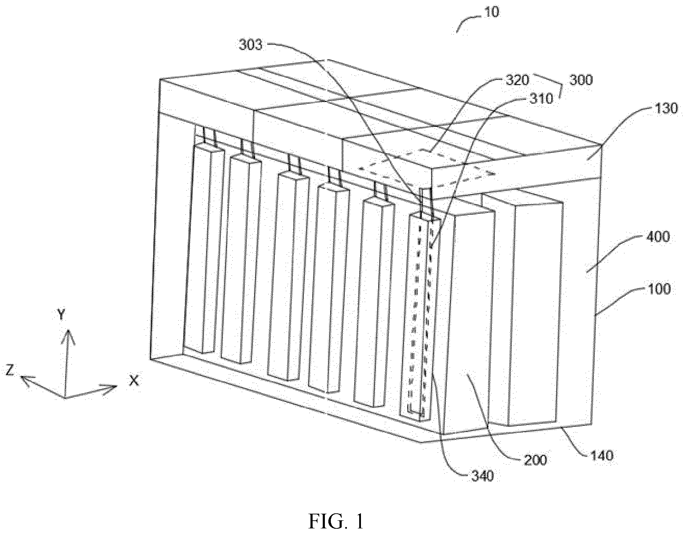

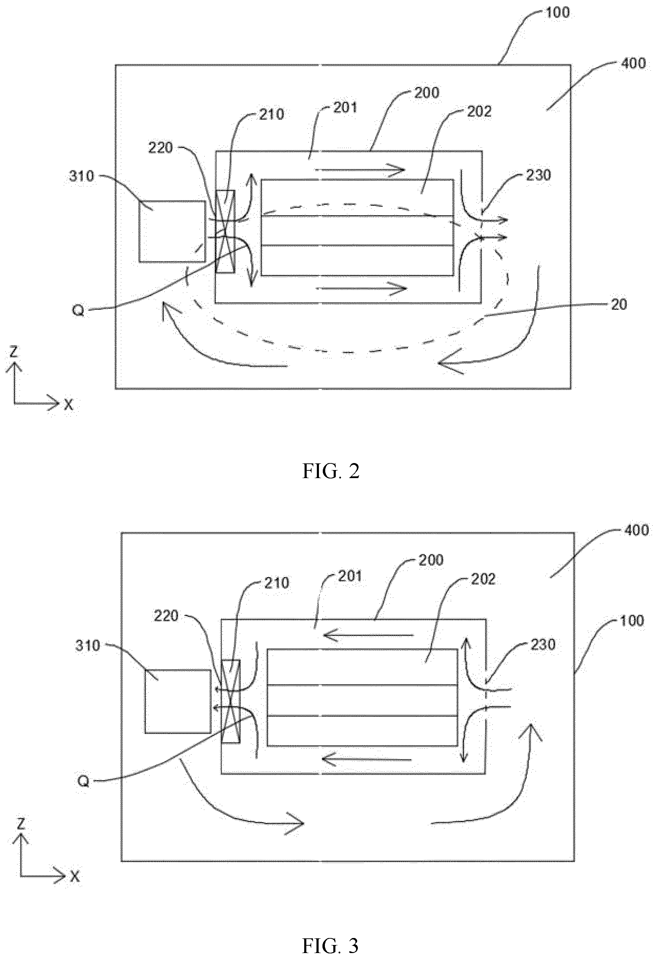

Refer to FIG. 1. An implementation of this application provides a chassis 10. The chassis 10 includes a chassis housing 100, an electric apparatus 200, and a heat control apparatus 300. The electric apparatus 200 is located in an accommodation cavity 400 in the chassis housing 100. The electric apparatus 200 includes a fan 210, a first air vent 220, and a second air vent 230 (as shown in FIG. 2). The fan 210 is configured to accelerate a speed at which an air flow flows between the first air vent 220 and the second air vent 230 The fan 210 is a structural component of the electric apparatus 200, and is configured to dissipate heat from a component in internal space 201 of the electric apparatus 200. In this application, the electric apparatus 200 includes an electric component 202. In the chassis 10, when the electric apparatus 200 works, the electric component 202 is a main heat source that generates heat in the electric apparatus 200. The fan 210 in the electric apparatus 200 is configured to dissipate heat from the electric component 202. The fan 210 can blow a gas to flow over a surface of the electric component 202 to dissipate heat from an electrochemical cell 202.

In this implementation, the chassis 10 is an energy storage container 10. The electric apparatus 200 is a battery module 200. The electric component 202 is the electrochemical cell 202. The battery module 200 generates a large amount of heat when working, and the fan 210 is configured to dissipate heat from the electrochemical cell 202. In some implementations, the chassis 10 may be a data center. The data center may be a small data center such as a cabinet, or may be a large data center such as a data equipment room. In some implementations, when the chassis 10 is the cabinet, the electric apparatus 200 is a server, and the electric component 202 is an electronic component in the server. The server generates a large amount of heat when working, and the fan 210 is configured to dissipate heat from the electronic component in the server. In another implementation, the chassis 10 may also be another device that requires heat exchange.

The speed at which the air flow flows between the first air vent 220 and the second air vent 230 includes a speed at which the air flow flows from the first air vent 220 to the second air vent 230 through the internal space 201 of the electric apparatus 200, or a speed at which the air flow flows from the first air vent 220 to the second air vent 230 through the accommodation cavity 400. Acceleration of the speed at which the air flow flows in the internal space 201 of the electric apparatus 200 accelerates the speed at which the air flow flows in the accommodation cavity 400 outside the electric apparatus 200.

As shown in FIG. 2, when the fan 210 works, air Q is driven to circulate between the first air vent 220, the internal space 201 of the electric apparatus 200, the second air vent 230, and the accommodation cavity 400. The first air vent 220, the internal space 201 of the electric apparatus 200, the second air vent 230, and the accommodation cavity 400 form an air flow circulation channel 20. The fan 210 is located in the air flow circulation channel 20. Specifically, in an implementation, the fan 210 drives the air Q to flow from the first air vent 220 to the internal space 201 of the electric apparatus 200, and then flow from the second air vent 230 to the accommodation cavity 400. The fan 210 then draws the air Q from the accommodation cavity 400 and delivers the air Q to the first air vent 220. In this way, the air flow circulation channel 20 is formed. In this implementation, the first air vent 220 is an air inlet of the electric apparatus 200, and the second air vent 230 is an air outlet of the electric apparatus 200. FIG. 2 is a schematic diagram showing only a scenario in which the air Q flows at on one side of the electric apparatus 200 in the accommodation cavity 400. In an actual scenario, the air Q may flow around the electric apparatus 200 in the accommodation cavity 400.

In another implementation, the first air vent 220 is the air outlet of the electric apparatus 200, and the second air vent 230 is the air inlet of the electric apparatus 200. As shown in FIG. 3, the fan 210 drives the air Q to flow from the second air vent 230 to the internal space 201 of the electric apparatus 200, then flow from the internal space 201 of the electric apparatus 200 to the first air vent 220, and flow out from the first air vent 220 to the accommodation cavity 400. The fan 210 then draws the air Q from the accommodation cavity 400, so that the air Q enters the internal space 201 of the electric apparatus 200 from the second air vent 230. In this way, the air flow circulation channel 20 is formed. In this application, the air flow circulation channel 20 is formed by using the fan 210 of the electric apparatus 200, without disposing an additional fan. In this way, costs can be reduced, other positions in the accommodation cavity 400 are not occupied, and internal space of the accommodation cavity 400 is saved.

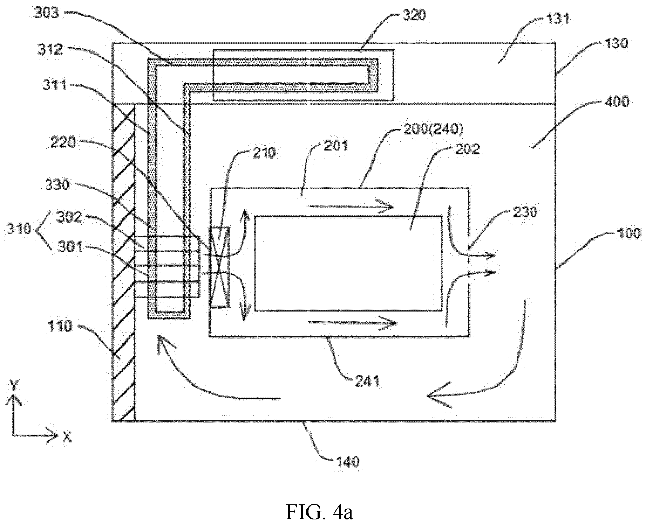

The heat control apparatus 300 includes a first heat exchanger 310, a second heat exchanger 320, and heat exchange working substance 330 (as shown in FIG. 4a). The first heat exchanger 310 communicates with the second heat exchanger 320 by using a duct 303. The heat exchange working substance 330 is located in the first heat exchanger 310 and the second heat exchanger 320, and can flow between the first heat exchange pipe 301 and a second heat exchange pipe 321. The first heat exchanger 310 and the second heat exchanger 320 implement heat exchange inside and outside the chassis housing 100 by using a thermodynamic cycle of the heat exchange working substance 330. The first heat exchanger 310 is located in the accommodation cavity 400 and is close to the first air vent 220.

The first heat exchanger 310 and the second heat exchanger 320 are components that can conduct heat, and may be air-liquid heat exchangers. The heat exchange working substance 330 can change from a first state to a second state when absorbing plenty of heat, and can change from the second state to the first state when releasing the heat, to implement the thermodynamic cycle. For example, the heat exchange working substance 330 changes from a liquid state to a gas state when absorbing plenty of heat, and changes from the gas state to the liquid state when releasing plenty of heat. The heat exchange working substance 330 is a refrigerant, such as water, glycol, acetone, or methanol. In an implementation, when the internal of the electric apparatus 200 needs to be cooled, heat generated by the electric apparatus 200 during working passes through the air flow circulation channel 20, to heat up air in the accommodation cavity 400. The first heat exchanger 310 located in the accommodation cavity 400 absorbs heat of the air in the accommodation cavity 400, and transfers the heat to the heat exchange working substance 330 in the first heat exchanger 310. The heat exchange working substance 330 absorbs the heat, and then is heated up to vaporize into a gas. The gaseous heat exchange working substance 330 flows to the second heat exchanger 320. The second heat exchanger 320 is configured to transfer the heat of the gaseous heat exchange working substance 330 outside the chassis housing 100. In this way, an internal-to-external heat exchange process of transferring the heat inside the chassis housing 100 to the external of the chassis housing 100 is implemented.

In an implementation, when the internal of the electric apparatus 200 needs to be heated up, for example, when the chassis 10 is located in a very cold region, the internal of the electric apparatus 200 is at a low temperature and cannot reach a normal working temperature of the electric apparatus 200. The electric apparatus 200 needs to be heated up, so that the electric apparatus 200 can work normally. The second heat exchanger 320 heats up the heat exchange working substance 330 in the second heat exchanger 320. The heated heat exchange working substance 330 flows to the first heat exchanger 310. The first heat exchanger 310 transfers heat of the heat exchange working substance 330 to the air in the accommodation cavity 400. The heated air in the accommodation cavity 400 passes through the air flow circulation channel 20 to heat up the electric apparatus 200. In this way, an external-to-internal heat exchange process of transferring the heat outside the chassis housing 100 to the internal of the chassis housing 100 is implemented.

The first heat exchanger 310 and the second heat exchanger 320 implement the internal-to-external heat exchange process and the external-to-internal heat exchange process by using the thermodynamic cycle of the heat exchange working substance 330. The first heat exchanger 310 is located in the accommodation cavity 400, and is configured to implement the heat exchange between the air in the accommodation cavity 400 and the heat exchange working substance 330 in the first heat exchanger 310. The heat exchange working substance 330 can flow from the first heat exchanger 310 to the second heat exchanger 320. The second heat exchanger 320 may be disposed at any position, provided that the heat exchange between the heat exchange working substance 330 in the second heat exchanger 320 and the external of the chassis housing 100 can be implemented. In the manner shown in FIG. 4a, the chassis housing 100 includes a top cover 130 and a bottom plate 140 that are disposed opposite to each other in a first direction Y. The second heat exchanger 320 is located in the top cover 130 of the chassis housing 100. The first direction Y is a height direction of the chassis 10. In some implementations, the second heat exchanger 320 is located on a side surface of the chassis housing 100.

In this application, the first heat exchanger 310 is disposed close to the first air vent 220 (as shown in FIG. 4a), so that the flowing air Q that enters the internal space 201 of the electric apparatus 200 from the first air vent 220 passes the first heat exchanger 310, or the flowing air Q in the internal space 201 of the electric apparatus 200 passes the first heat exchanger 310 after being discharged from the first air vent 220. In this way, the air Q in the internal space 201 of the electric apparatus 200 can exchange heat with the first heat exchanger 310 timely. This improves the heat exchange efficiency for the electric apparatus 200. For example, when heat dissipation and cooling need to be performed on the electric apparatus 200, it is assumed that the first air vent 220 is the air inlet. The electric apparatus 200 works and generates heat. The fan 210 works to drive the cold air Q cooled by the first heat exchanger 310 to quickly enter the internal space 201 of the electric apparatus 200 from the first air vent 220, to cool the electric apparatus 200 timely. In this way, a deliver distance of the cold air Q from the first heat exchanger 310 to the internal space 201 of the electric apparatus 200 is shortened, a cold loss is reduced, and cooling effect for the electric apparatus 200 is improved. The electric apparatus 200 is the heat source that generates heat. The first heat exchanger 310 is a cooling source that cools the electric apparatus 200. The heat source (the electric apparatus 200) and the cooling source (the first heat exchanger 310) are disposed adjacently, to achieve good heat exchange effect, and improve the heat dissipation efficiency for the electric apparatus 200.

If the first heat exchanger 310 is disposed away from the first air vent 220, when the electric apparatus 200 needs to be cooled, the first heat exchanger 310 first cools a component or air near the first heat exchanger 310. The cooled component or air near the first heat exchanger 310 exchanges heat with another distant component or air. The cold loss is generated in this process. For example, a part of the cold air exchanges heat with an inner wall of the chassis housing 100 to cool the chassis housing 100. The cooled chassis housing 100 exchanges heat with external air by using an outer wall of the chassis housing 100. In other words, a part of the cold air is used to cool the external air, and this causes the cold loss and reduces cooling efficiency of the heat control apparatus 300 for the electric apparatus 200. However, in this application, the first heat exchanger 310 is disposed close to the first air vent 220, so that the first heat exchanger 310 cools air passing through the first air vent 220 to a maximum extent. This reduces the cold loss. When the first air vent 220 is the air inlet, the air cooled by the first heat exchanger 310 enters the internal space of the electric apparatus 200 from the first air vent 220 timely, to cool the internal component of the electric apparatus 200. When the first air vent 220 is the air outlet, hot air in the internal space of the electric apparatus 200 is driven by the fan 210 to pass through the first air vent 220, and is then cooled by the first heat exchanger 310 timely. The cold air obtained through cooling passes through the air flow circulation channel 20 to enter the internal space 201 of the electric apparatus 200 for another time from the second air vent 230, to cool the component in the internal space 201 of the electric apparatus 200. This improves cooling effect for the electric apparatus 200, and improves the cooling efficiency of the heat control apparatus 300 for the electric apparatus 200.

If the first heat exchanger 310 is disposed away from the first air vent 220, when the electric apparatus 200 needs to be heated, the first heat exchanger 310 first heats the component or air near the first heat exchanger 310. The heated component or air near the first heat exchanger 310 exchanges heat with another distant component or air. The heat loss is generated in this process. For example, a part of the hot air exchanges heat with the inner wall of the chassis housing 100 to heat the chassis housing 100. The heated chassis housing 100 also exchanges heat with the external air by using the outer wall. In other words, a part of the hot air is used to heat the external air, and this causes the heat loss and reduces heating efficiency of the heat control apparatus 300 for the electric apparatus 200. However, in this application, the first heat exchanger 310 is disposed close to the first air vent 220, so that the first heat exchanger 310 heats air passing through the first air vent 220 to a maximum extent. This reduces the heat loss. When the first air vent 220 is the air inlet, the air heated by the first heat exchanger 310 enters the internal space of the electric apparatus 200 from the first air vent 220 timely, to heat the internal component of the electric apparatus 200. When the first air vent 220 is the air outlet, cold air in the internal space of the electric apparatus 200 is driven by the fan 210 to pass through the first air vent 220, and is then heated by the first heat exchanger 310 timely. The hot air obtained through heating passes through the air flow circulation channel 20 to enter the internal space 201 of the electric apparatus 200 for another time from the second air vent 230, to heat the component in the internal space 201 of the electric apparatus 200. This improves heating effect for the electric apparatus 200, and improves the heating efficiency of the heat control apparatus 300 for the electric apparatus 200.

The fan 210 is a fan of the electric apparatus 200, and is generally disposed inside the electric apparatus 200. Alternatively, fans 210 are disposed in the first air vent 220 and the second air vent 230 of the electric apparatus 200. In other words, the fan 210 is at a short distance from the first air vent 200, and a flow volume and a flow rate of the air flowing through the first air vent 200 are the largest. When the air with the large flow volume and the large flow rate passes the first heat exchanger 310, a large volume of air exchanges heat with the first heat exchanger 310 over a unit of time. This improves the heat exchange efficiency. If the fan 210 is disposed away from the electric apparatus 200, in terms of an air volume, the air driven by the fan 210 disperses in the accommodation cavity 400, and a volume and a speed of air reaching the first heat exchanger 310 are reduced. This causes reduced heat exchange efficiency of the first heat exchanger 310.

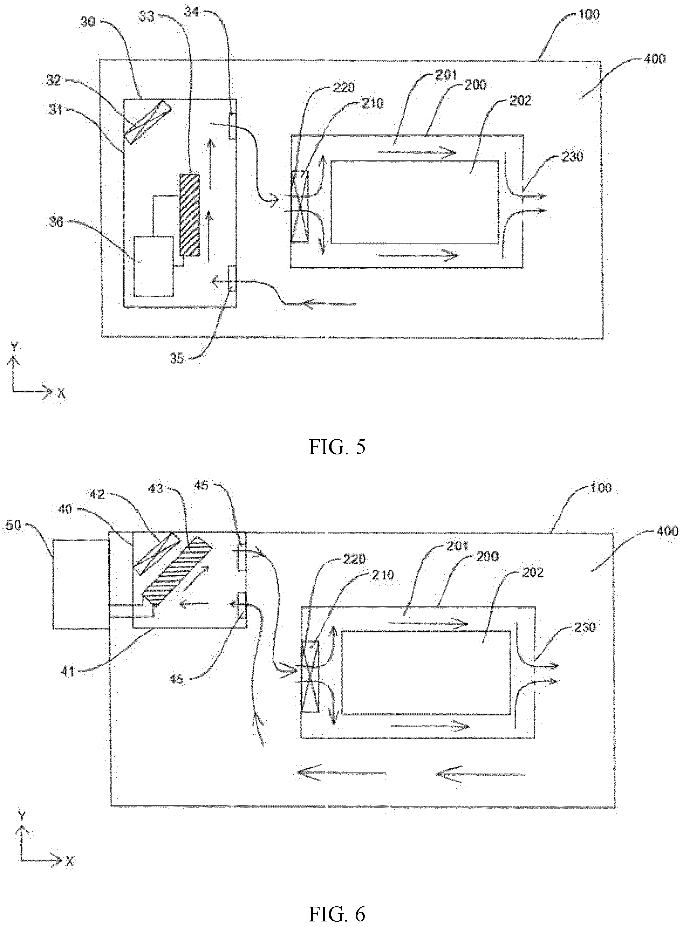

Refer to FIG. 5. When an integrated air conditioner 30 is disposed inside the chassis 10 to cool the electric apparatus 200, the integrated air conditioner 30 indicates that an air conditioner indoor unit and an air conditioner outdoor unit are of an integrated structure. The integrated air conditioner 30 has a large size, and this increases an internal size of the chassis 10. Heat dissipation effect for the electric apparatus 200 is poor.

As shown in FIG. 5, the integrated air conditioner 30 includes an air conditioner housing 31, an air conditioner fan 32, an evaporator 33, and an air conditioner outdoor unit component 36 that are located in the air conditioner housing 31. The air conditioner housing 31 includes an air outlet 34 and an air inlet 35. There is a specific distance between the air outlet 34 and the air inlet 35. Generally, the air outlet 34 and the air inlet 35 on the air conditioner housing 31 are located at upper and lower ends of the air conditioner housing 31. The evaporator 33 is configured to cool air entering the air conditioner housing 31. The cooled air is discharged from the air outlet 34 to the accommodation cavity 400. The air conditioner outdoor unit component 36 is configured to transfer heat of the evaporator 33 to the external of the chassis housing 100. When the integrated air conditioner 30 is used to cool the electric apparatus 200, the cold air cooled by the evaporator 33 flows from the air outlet 34 to the accommodation cavity 400. The cold air between the air outlet 34 and the electric apparatus 200 causes the cold loss. Then, heat dissipation is performed on the electric apparatus 200. In this heat dissipation manner, the evaporator 33 configured to cool hot air is located inside the air conditioner housing 31, and an air path between the evaporator 33 and the electric apparatus 200 is long. The hot air generated by using heat generated inside the electric apparatus 200 fails to be cooled near the first air vent 220 of the electric apparatus 200. The hot air needs to pass through the long path to reach the evaporator 33. Heat of the hot air is transferred to other space of the accommodation cavity 400. A volume of the hot air reaching the evaporator 33 is reduced, and the heat dissipation efficiency of the evaporator 33 for the electric apparatus 200 is reduced. The heat dissipation efficiency is lower than the heat dissipation efficiency of the first heat exchanger 310 for the electric apparatus 200 when the first heat exchanger 310 is disposed close to the first air vent 22 in this application.

Refer to FIG. 6. When a split-type air conditioner is used to cool the electric apparatus 200, an air conditioner indoor unit 40 is disposed inside the chassis 10, and an air conditioner outdoor unit 50 is disposed outside the chassis 10. The air conditioner indoor unit 40 blows out cold air to cool the accommodation cavity 400 and the electric apparatus 200. The air conditioner indoor unit 40 includes an air conditioner housing 41, and an air conditioner fan 42 and an evaporator 43 that are located in the air conditioner housing 41. The air conditioner indoor unit 40 also has a large size, and this increases the internal size of the chassis 10. The air conditioner housing 41 includes an air outlet 44 and an air inlet 45. In this implementation, a distance between the evaporator 43 and the electric apparatus 200 is long. This also causes a specific cold loss. Heat dissipation effect for the electric apparatus 200 is poor. In addition, in the two manners shown in FIG. 5 and FIG. 6, the fan needs to be disposed inside the air conditioner. This increases the costs. However, in this application, no additional fan needs to be provided.

In this application, the fan 210 of the electric apparatus 200 is used to implement air circulation between the internal space 201 of the electric apparatus 200 and the accommodation cavity 400, without disposing the additional fan. In this way, the costs are saved and the space of the accommodation cavity 400 is saved. In addition, the first heat exchanger 310 is disposed close to the first air vent 220 of the electric apparatus 200, so that the first heat exchanger 310 can perform the heat exchange on the electric apparatus 200 timely. In this way, heat exchange effect for the electric apparatus 200 is improved, and heat exchange efficiency of the heat control apparatus 300 for the electric apparatus 200 is improved.

The first heat exchanger 310 may include the first heat exchange pipe 301. Alternatively, the first heat exchanger 310 may include the first heat exchange pipe 301 and a thermal pad 302 (as shown in FIG. 4a). The first heat exchange pipe 301 passes through the thermal pad 302. The thermal pad 302 is configured to increase an area of air contact for the heat exchange. The first heat exchanger 310 may alternatively be another structural component. For example, when the first heat exchanger 310 is configured to cool the air, the first heat exchanger 310 may be an evaporator. Still refer to FIG. 4a. In a possible implementation, the electric apparatus 200 includes a compartment housing 241 and an electric component 202 located in the compartment housing 241. The compartment housing 241 includes the first air vent 220 and the second air vent 230. The fan 210 is located at at least one of the following positions: the first air vent 220, the second air vent 230, and internal space of the compartment housing 241.

The compartment housing 241 is a housing configured to accommodate the electric component 202, and the electric component 202 in the compartment housing 241 is the electric component 202 of the electric apparatus 200. The compartment housing 241 and the electric component 202 located in the compartment housing 241 form an electric compartment 240. When the electric apparatus 200 is a battery module, the compartment housing 241 is a housing configured to accommodate an electrochemical cell. When the electric apparatus 200 is a server, the compartment housing 241 is a housing configured to accommodate an electronic component. In this implementation, the electric apparatus 200 is the battery module, and the compartment housing 241 and the electrochemical cell 202 located in the compartment housing 241 form a battery compartment.

In this implementation, the first air vent 220 and the second air vent 230 are disposed opposite to each other in a second direction X (as shown in FIG. 4a). The second direction X intersects the first direction Y. The first air vent 220 is the air inlet, and the second air vent 230 is the air outlet. The fan 210 is located at the first air vent 220 (as shown in FIG. 4a), so that air that exchanges heat with the first heat exchanger 310 is directly blown into the internal space 201 of the compartment housing 241 from the first air vent 220, to exchange heat with the electric component 202. In this way, the heat exchange efficiency is improved. In some implementations, the first air vent 220 is the air outlet, and the second air vent 230 is the air inlet. Air from the internal space 201 of the compartment housing 241 directly exchanges heat with the first heat exchanger 310 after being discharged from the first air vent 220.

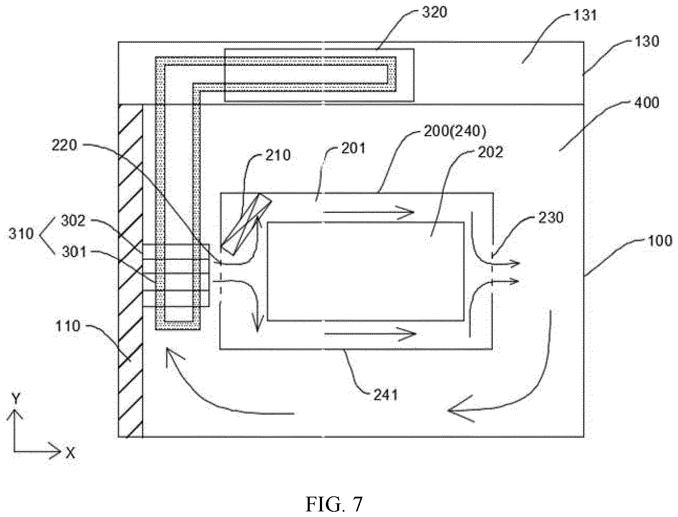

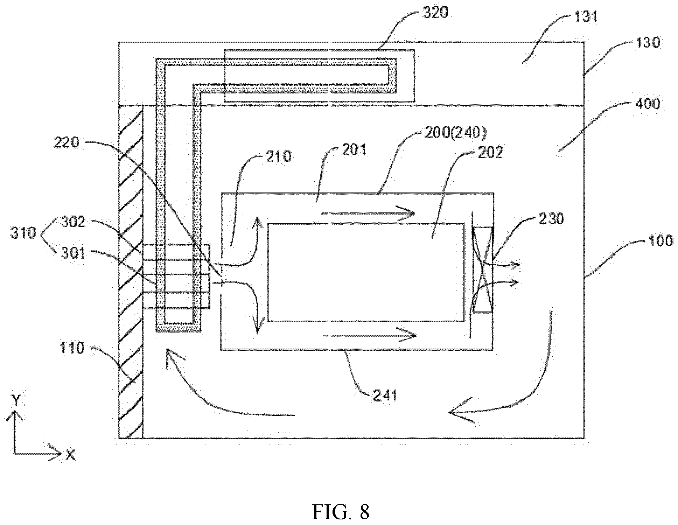

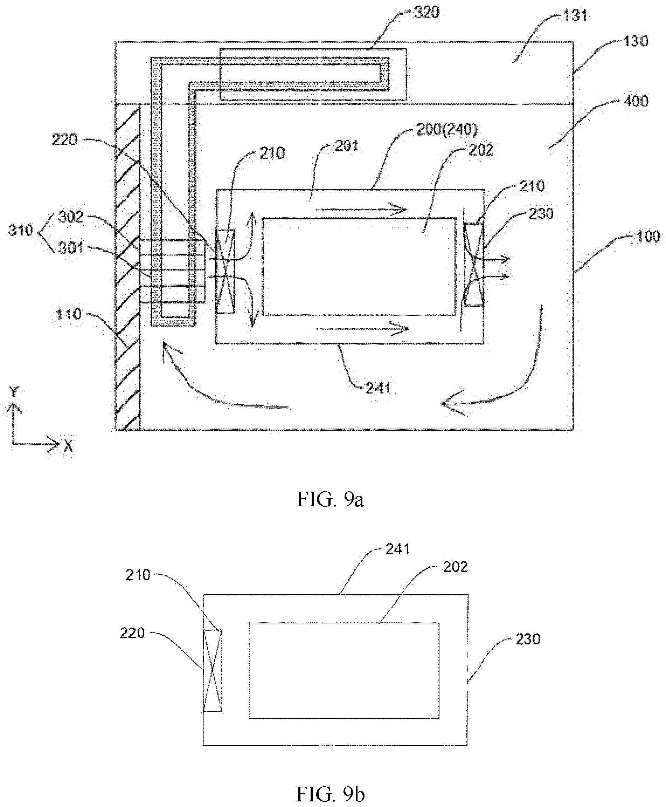

In an implementation, the fan 210 may alternatively be located in the internal space of the compartment housing 241 (as shown in FIG. 7). The internal space of the compartment housing 241 is the internal space 201 of the electric apparatus 200. The fan 210 may be located at any position of the compartment housing 241. Specifically, the fan 210 may be disposed based on an arrangement manner of the electric component 202, to properly arrange the fan 210 and the electric component 202, and ensure a ventilation volume and a quantity of electric components 202. In an implementation, the fan 210 may be located at the second air vent 230 (as shown in FIG. 8). In an implementation, there are two fans 210. The two fans 210 are respectively located at the first air vent 220 and the second air vent 230 (as shown in FIG. 9a).

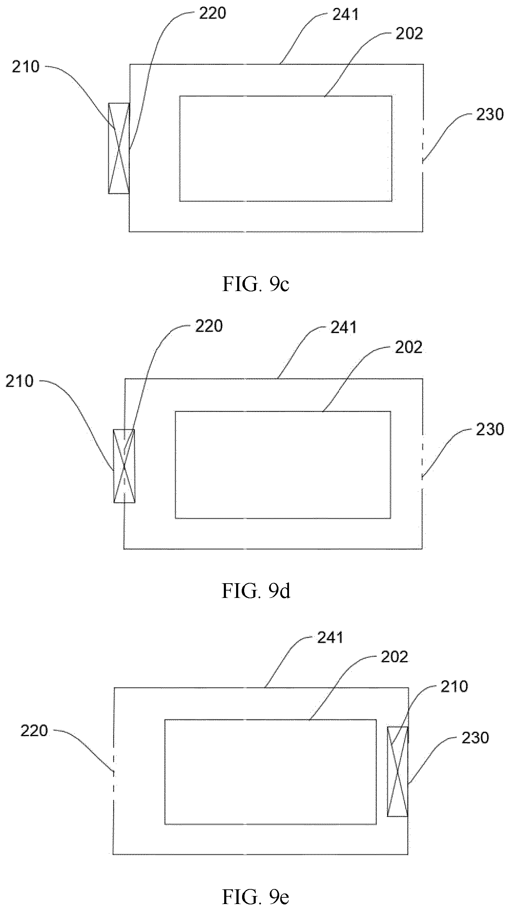

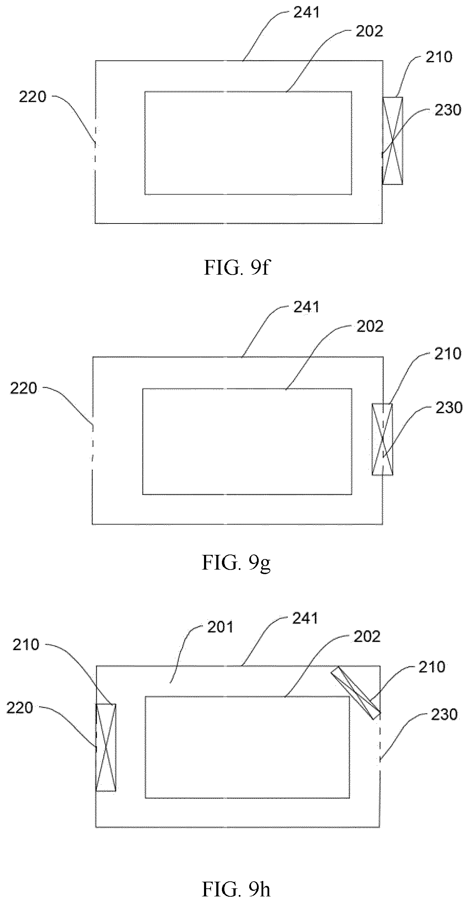

That the fan 210 is located at the first air vent 220 includes that the fan 310 is fastened to a side that is of the first air vent 220 and that faces the internal space of the compartment housing 241 (as shown in FIG. 9b), that the fan 210 is fastened to a side that is of the first air vent 220 and that is away from the internal space of the compartment housing 241 (as shown in FIG. 9c), or that the fan 210 is fastened to the compartment housing 241 around the first air vent 220 (as shown in FIG. 9d). That the fan 210 is located at the second air vent 230 includes that the fan 310 is fastened to a side that is of the second air vent 230 and that faces the internal space of the compartment housing 241 (as shown in FIG. 9e), that the fan 210 is fastened to a side that is of the second air vent 230 and that is away from the internal space of the compartment housing 241 (as shown in FIG. 9f), or that the fan 210 is fastened to the compartment housing 241 around the second air vent 230 (as shown in FIG. 9g).

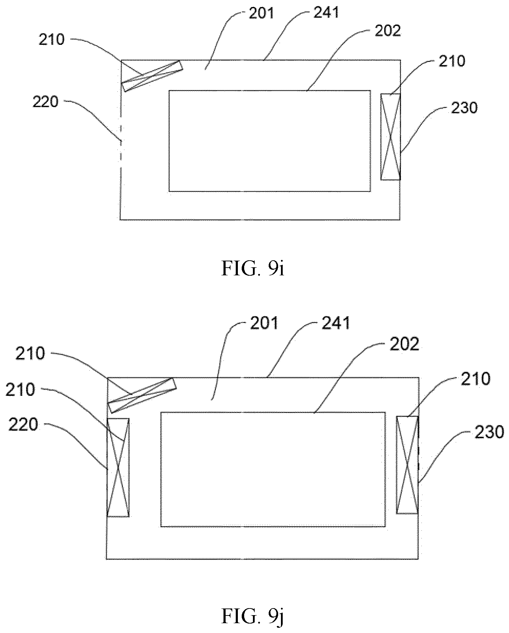

In an implementation, the electric apparatus 200 includes a plurality of fans 210. The plurality of fans 210 are respectively located at the first air vent 220 and the second air vent 230 (as shown in FIG. 9a). In an implementation, the plurality of fans 210 are respectively located at the first air vent 220 and in the internal space 201 of the compartment housing 241 (as shown in FIG. 9h). In an implementation, the plurality of fans 210 are respectively located at the second air vent 230 and in the internal space 201 of the compartment housing 241 (as shown in FIG. 9i). In an implementation, the plurality of fans 210 are respectively located at the first air vent 220, the second air vent 230, and in the internal space 201 of the compartment housing 241 (as shown in FIG. 9j). The manner of disposing the plurality of fans 210 can improve the speed at which the air flows.

Still refer to FIG. 4a. In this implementation, when the heat control apparatus 300 is configured to cool the electric compartment 240, the fan 210 drives the air Q cooled by the first heat exchanger 310 to flow from the first air vent 220 to the internal space of the compartment housing 241, to cool the electric component 202. The air Q is heated up, and the heated air Q flows from the second air vent 230 to the accommodation cavity 400. The air Q returns to the first air vent 220 through the air flow circulation channel 20 to be cooled by the first heat exchanger 310. The cooled air Q enters the internal space of the compartment housing 241 for another time. This can effectively improve the cooling efficiency for the electric component 202 in the compartment housing 241.

In some implementations, the heat control apparatus 300 may be configured to heat the electric compartment 240. A specific heating process is similar to the foregoing heating process. Details are not described herein again.

In this implementation, the chassis housing 100 includes a first side panel 110 (as shown in FIG. 4a). The first air vent 220 faces the first side panel 110. The first heat exchanger 310 is located between the first side panel 110 and the first air vent 220, and is fastened to an inner surface that is of the first side panel 110 and that faces the electric apparatus 200. The first heat exchanger 310 is mounted on the first side panel 110, to facilitate maintenance of the first heat exchanger 310 and the electric apparatus 200. The first heat exchanger 310 can be maintained provided that the first side panel 110 is opened.

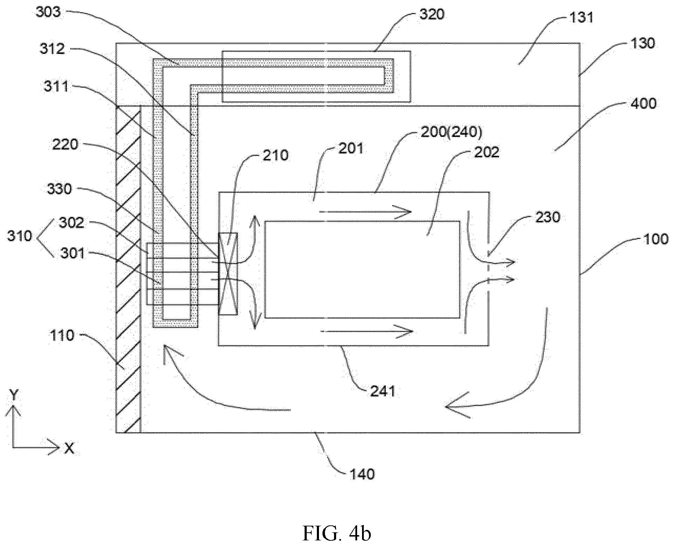

In another implementation, the first heat exchanger 310 may alternatively be fastened to an outer side of the electric apparatus 200 (as shown in FIG. 4b). The chassis housing 100 includes the first side panel 110. The first side panel 110 is located on a side of the electric apparatus 200 in the second direction X. The first air vent 220 and the second air vent 230 are disposed opposite to each other in the second direction X. The first side panel 110 is disposed closer to the second air vent 230 than to the first air vent 220. The first heat exchanger 310 is fastened to the outer side of the electric apparatus 200.

In some implementations, a plurality of first heat exchangers 310 may be further disposed on other sides of the electric apparatus 200, to improve heat exchange effect for the electric apparatus 200.

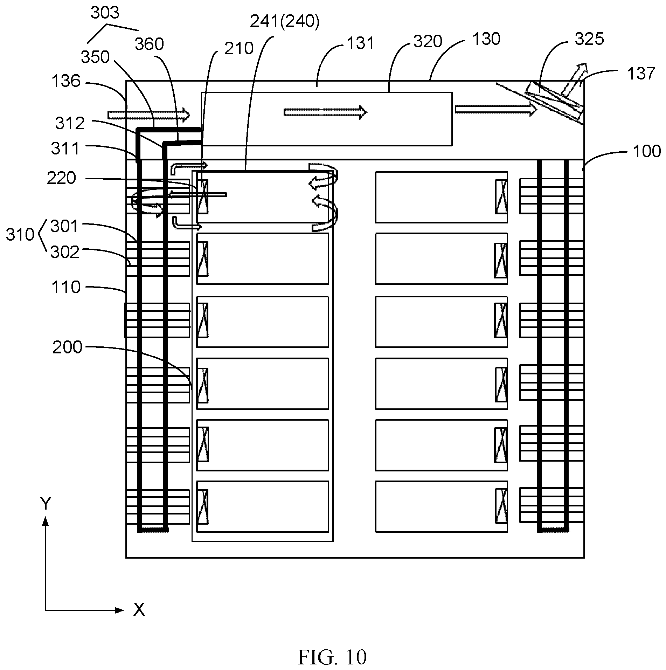

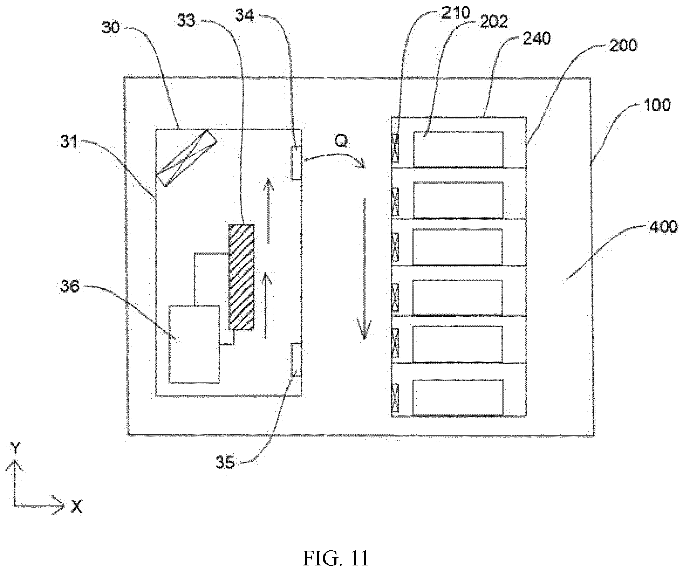

Refer to FIG. 10. In a possible implementation, the electric apparatus 200 includes a plurality of compartment housings 241 that are stacked. In each compartment housing 241, the first heat exchanger 310 is disposed on an outer side of the first air vent 220, and at least a part of the first heat exchanger 310 is opposite to the first air vent 220. In this implementation, the chassis housing 100 further includes the top cover 130 and the bottom plate 140 that are disposed opposite to each other in the first direction Y. The electric apparatus 200 is located in a region between the top cover 130 and the bottom plate 140. A direction in which the plurality of compartment housings 241 are stacked is the first direction Y. The first heat exchanger 310 extends in the first direction Y. Therefore, there is a part of the first heat exchanger 310 at the first air vent 220 of each compartment housing 241, to dissipate heat from each electric compartment 240. This achieves uniform heat dissipation. In this implementation, the first direction Y is a height direction of the chassis housing 100, and the second direction X is a width direction of the chassis housing 100. When the integrated air conditioner 30 is used to dissipate heat from the electric apparatus 200 in this implementation (as shown in FIG. 11), the air outlet of the integrated air conditioner 30 is generally located at a high position. After the cold air Q from the air outlet 34 of the integrated air conditioner 30 flows to the accommodation cavity 400, a flow volume of the cold air Q gradually decreases from top to bottom, and a temperature of the cold air Q gradually increases from top to bottom. In this case, the cold air Q achieves different heat dissipation effect for the electric compartment 240 at the top of the electric apparatus 200 and the electric compartment 240 at the bottom of the electric apparatus 200. Heat dissipation effect for electric compartments 240 in the electric apparatus 200 from top to bottom of the electric apparatus 200 gradually deteriorates. The heat dissipation is non-uniform.

However, in this implementation, a part of the first heat exchanger 310 is disposed at the first air vent 220 of each compartment housing 241. When the electric apparatus 200 is cooled, the heat exchange working substance 330 in the first heat exchanger 310 is liquid. The liquid changes into the gas after absorbing heat. Heat absorbed by the liquid heat exchange working substance 330 at different positions in the first heat exchanger 310 to change from the liquid to the gas differs slightly. In this implementation, more liquid heat exchange working substance 330 may be disposed in the first heat exchanger 310, so that the liquid heat exchange working substance 330 can flow to any part of the first heat exchanger 310, or the liquid heat exchange working substance 330 can at least flow to a part that is of the first heat exchanger 310 and that is close to the first air vent 220 of each compartment housing 241. In this way, the part that is of the first heat exchanger 310 and that is close to the first air vent 220 of each compartment housing 241 achieves same heat absorption effect. This improves heat dissipation uniformity for electric compartments 240 in the electric apparatus 200.

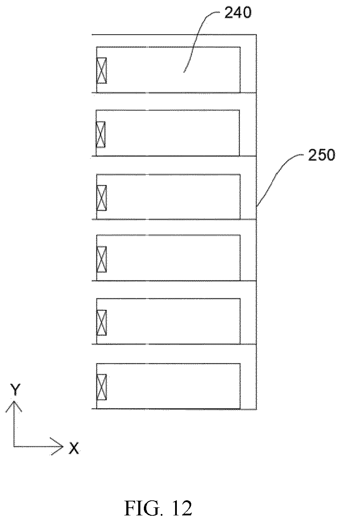

In an implementation, the electric apparatus 200 includes an electric support 250 (as shown in FIG. 12). A plurality of electric compartments 240 are disposed on the electric support 250. A structure of the electric support 250 is not limited to the structure shown in FIG. 12, and may alternatively be another structure. In some implementations, the plurality of electric compartments 240 may be directly stacked in the first direction Y.

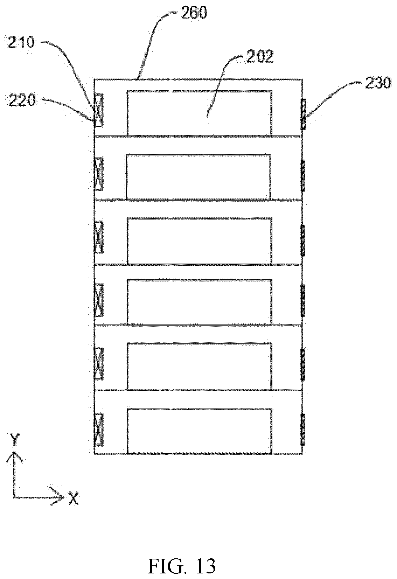

Refer to FIG. 13. In some implementations, the electric apparatus 200 includes an apparatus housing 260 and the electric component 202 located in the apparatus housing 260. The apparatus housing 260 includes the first air vent 220 and the second air vent 230. The fan 210 is located at at least one of the following positions: the first air vent 220, internal space of the apparatus housing 260, or the second air vent 230. When the electric apparatus 200 is the battery module 200, the battery module 200 includes a module housing 260 and an electrochemical cell 202 located in the module housing 260. The electrochemical cell 202 is directly disposed in the module housing 260. The module housing 260 includes the first air vent 220 and the second air vent 230. The fan 210 is located at at least one of the following positions: the first air vent 220, the internal space of the apparatus housing 260, or the second air vent 230.

The first air vent 220 and the second air vent 230 are respectively disposed on housings that are of the apparatus housing 260 and that are disposed opposite to each other in the second direction X. The fan 210 may be fastened to the apparatus housing 260 through snap-fitting or by using a screw. A specific manner is not limited. When the electric apparatus 200 includes a plurality of electric components 202 arranged in the first direction Y (as shown in FIG. 13), the plurality of electric components 202 may be arranged on the support in the first direction Y or stacked in the first direction Y. A plurality of first air vents 220, a plurality of second air vents 230, and a plurality of fans 210 are disposed on the housings on two sides of the apparatus housing 260 in the second direction X. In this way, each electric component 202 has the first air vent 220 and the second air vent 230 respectively at two sides in the second direction X, and has the fan 210 for blowing air right towards the electric component 202.

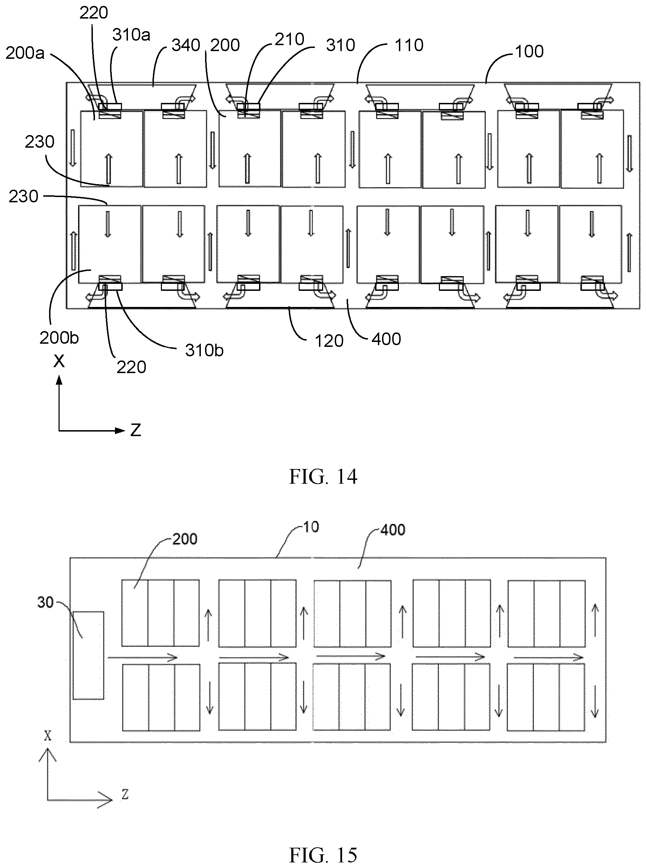

Refer to FIG. 14. In a possible implementation, the chassis 10 includes a plurality of electric apparatuses 200 arranged in a row. The heat control apparatus 300 includes a plurality of first heat exchangers 310. One first heat exchanger 310 is disposed at the first air vent 220 of each of the plurality of electric apparatuses 200. A direction in which the plurality of electric apparatuses 200 are arranged is a third direction Z, and the third direction Z intersects with both the second direction X and the first direction Y. In this implementation, the first direction Y is the height direction of the chassis housing 100, the second direction X is the width direction of the chassis housing 100, and the third direction Z is a length direction of the chassis housing 100.

In this implementation, there are the plurality of electric apparatuses 200 (as shown in FIG. 14). The electric apparatus 200 has a plurality of electric compartments 240 (as shown in FIG. 10). When the first heat exchangers 310 are configured to cool the plurality of electric apparatuses 200, a part of the first heat exchanger 310 is disposed at the first air vent 220 of each electric compartment 240 in each electric apparatus 200. In this way, heat dissipation effect can be improved for each electric compartment 240, and the heat dissipation uniformity for all electric apparatuses 200 can be improved. In this implementation, a quantity of electric apparatuses 200 arranged in the third direction Z is not limited. When there are a large quantity of electric apparatuses 200, good heat dissipation uniformity is still achieved. When the first heat exchangers 310 are configured to heat the plurality of electric apparatuses 200, good heating uniformity is achieved.

However, when the integrated air conditioner 30 is used to dissipate heat from the electric apparatuses 200 in this implementation (as shown in FIG. 15), the air outlet of the integrated air conditioner 30 is generally located at one end of the chassis housing 100. In this case, heat dissipation effect for the electric apparatus 200 away from the integrated air conditioner 30 is worse than heat dissipation effect for the electric apparatus 200 close to the integrated air conditioner 30. Overall heat dissipation uniformity is poor. To improve the heat dissipation uniformity, a plurality of integrated air conditioners 30 need to be disposed at a plurality of positions in the chassis housing 100. This causes the costs to increase, and more space in the chassis housing 100 is occupied. In addition, if the plurality of integrated air conditioners 30 are mounted on the first side panel 110, the first side panel 110 bears a heavy weight and is prone to damage. This causes high maintenance costs of the first side panel 110. In this application, a manner in which the first heat exchanger 310 is close to the first air vent 220 is used to reduce the costs and save the space. When the plurality of electric apparatuses 200 are heated up, parts of the first heat exchangers 310 are disposed at positions close to the first air vents 220 in this application, so that heat exchange uniformity for all the electric apparatuses 200 can be improved.

When there are the plurality of first heat exchangers 310. the heat control apparatus 300 may include one second heat exchanger 320 or a plurality of second heat exchangers 320. When there is only one second heat exchanger 320, the second heat exchanger 320 communicates with the plurality of first heat exchangers 310, and is configured to perform the heat exchange on the heat exchange working substance 330 in the plurality of first heat exchangers 310. When there are a plurality of second heat exchangers 320, the second heat exchangers 320 may respectively communicate with the plurality of first heat exchangers 310, and perform the heat exchange respectively on the heat exchange working substance 330 in the plurality of first heat exchangers 310. This may be specifically set based on an actual requirement.

In some implementations, the chassis housing 10 includes the plurality of electric apparatuses 200 arranged in the second direction X. One first heat exchanger 310 is disposed on an outer side of each of the electric apparatuses 200. The first heat exchanger 310 may be adaptively increased based on a quantity or distribution positions of the electric apparatuses 200. The plurality of first heat exchangers are distributed, and may dissipate heat from each electric apparatus 200. This improves heat dissipation effect.

Still refer to FIG. 14. In an implementation, two electric apparatuses 200 are arranged in the second direction X, and are respectively denoted as an electric apparatus 200a and an electric apparatus 200b. The chassis housing 100 further includes a second side panel 120 disposed opposite to the first side panel 110. The electric apparatus 200a is disposed close to the first side panel 110. The electric apparatus 200b is disposed close to the second side panel 120. A first heat exchanger 310a is fastened to an inner surface that is of the first side panel 110 and that is close to the electric apparatus 200a. The first air vent 220 of the electric apparatus 200a is disposed closer to the first side panel 110 than the second air vent 230. The first heat exchanger 310a performs the heat exchange on the electric apparatus 200a. A first heat exchanger 310b is fastened to an inner surface that is of the second side panel 120 and that is close to the electric apparatus 200b. The first air vent 220 of the electric apparatus 200b is disposed closer to the second side panel 120 than the second air vent 230. The first heat exchanger 310b performs the heat exchange on the electric apparatus 200b. In other words, the first air vents 220 of the two electric apparatuses 200 arranged in the second direction X are respectively close to the first side panel 110 and the second side panel 120.

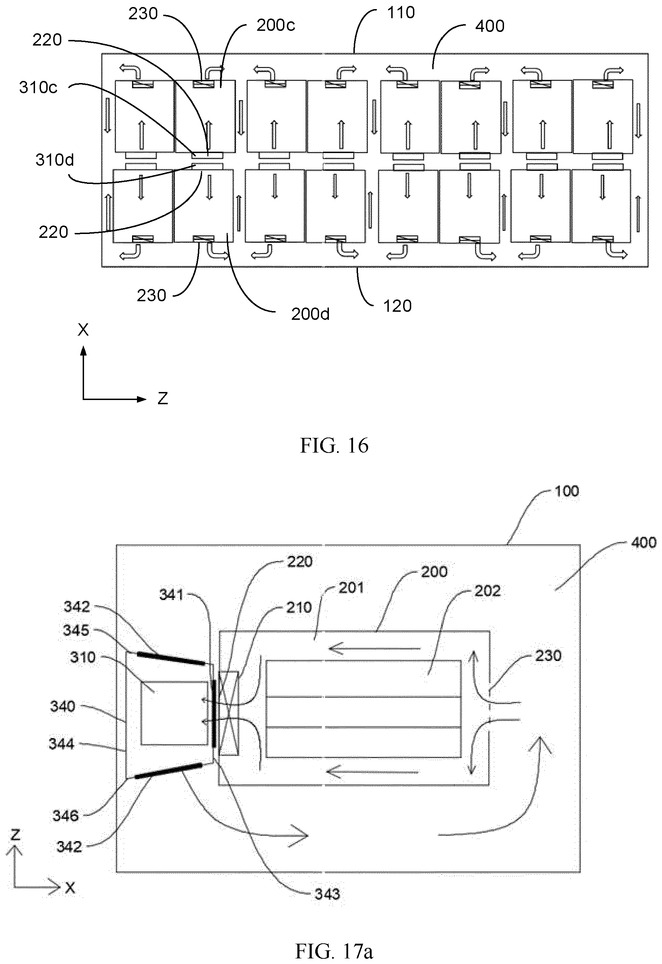

Refer to FIG. 16. In an implementation, two electric apparatuses 200 are arranged in the second direction X, and are respectively denoted as an electric apparatus 200c and an electric apparatus 200d. The chassis housing 100 includes the second side panel 120 disposed opposite to the first side panel 110. The electric apparatus 200c is disposed close to the first side panel 110. The electric apparatus 200d is disposed close to the second side panel 120. A first heat exchanger 310c is fastened to a surface that is of the electric apparatus 200c and that is away from the first side panel 110. The first air vent 220 of the electric apparatus 200c is disposed farther from the first side panel 110 than the second air vent 230, and is close to the first heat exchanger 310c. The first heat exchanger 310c performs the heat exchange on the electric apparatus 200c. A first heat exchanger 310d is fastened to a surface that is of the electric apparatus 200d and that is away from the second side panel 120. The first air vent 220 of the electric apparatus 200d is disposed farther from the second side panel 120 than the second air vent 230. The first heat exchanger 310d performs the heat exchange on the electric apparatus 200d. In other words, the first air vents 220 of the two electric apparatuses 200 arranged in the second direction X are respectively away from the first side panel 110 and the second side panel 120.

In some implementations, more than two electric apparatuses 200 are arranged in the second direction X. In this case, the first heat exchanger 310 of the electric apparatus 200 located between the electric apparatus 200a and the electric apparatus 200b may be fastened to the electric apparatus 200.

In a possible implementation, the heat control apparatus 300 further includes an air guide housing 340 (as shown in FIG. 17a). The air guide housing 340 and the first heat exchanger 310 are located on a same side of the electric apparatus 200 in the second direction X. The air guide housing 340 and the first heat exchanger 310 extend in the first direction Y (as shown in FIG. 1). The second direction X intersects the first direction Y. The first heat exchanger 310 is located in the air guide housing 340. A third air vent 341 and a fourth air vent 342 are disposed on the air guide housing 340. The third air vent 341 is disposed closer to the first air vent 220 than the fourth air vent 342 (as shown in FIG. 17a). The third air vent 341 and the first air vent 220 are configured to communicate internal space of the air guide housing 340 with the internal space of the electric apparatus 200. The fourth air vent 342 is configured to communicate the internal space of the air guide housing 340 with the accommodation cavity 400.

The third air vent 341 and the fourth air vent 342 are located in the air flow circulation channel 20. When the first air vent 220 is the air outlet of the electric apparatus 200, and the second air vent 230 is the air inlet of the electric apparatus 200, the third air vent 341 is an air inlet of the air guide housing 340, and the fourth air vent 342 is an air outlet of the air guide housing 340. Air coming out from the first air vent 220 passes through the third air vent 341 and enters the internal space of the air guide housing 340, and is cooled by the first heat exchanger 310. The air guide housing 340 allows the air to temporarily stay in an accommodation hole of the air guide housing 340, so that the air is in contact with the first heat exchanger 310 for long time. In this way, the heat exchange can be implemented adequately.

In an implementation, a central axis of the third air vent 341 overlaps a central axis of the first air vent 220, so that the air flows more smoothly between the first air vent 220 and the third air vent 341.

In an implementation, the air guide housing 340 includes a first side plate 343, a second side plate 344, a third side plate 345, and a fourth side plate 346 (as shown in FIG. 17a). The first side plate 343 and the second side plate 344 are disposed opposite to each other in the second direction X. The third side plate 345 and the fourth side plate 346 are disposed opposite to each other in the third direction Z. The first side plate 343, the third side plate 345, the second side plate 344, and the fourth side plate 346 are sequentially connected to form the air guide housing 340. The first side plate 343 is disposed close to the first air vent 220. The third air vent 341 is disposed on the first side plate 343. Fourth air vents 342 are disposed on both the third side plate 345 and the fourth side plate 346. Air coming from the third air vent 341 may be divided into two air flows and discharged from the fourth air vents 342 on the third side plate 345 and the fourth side plate 346 respectively.

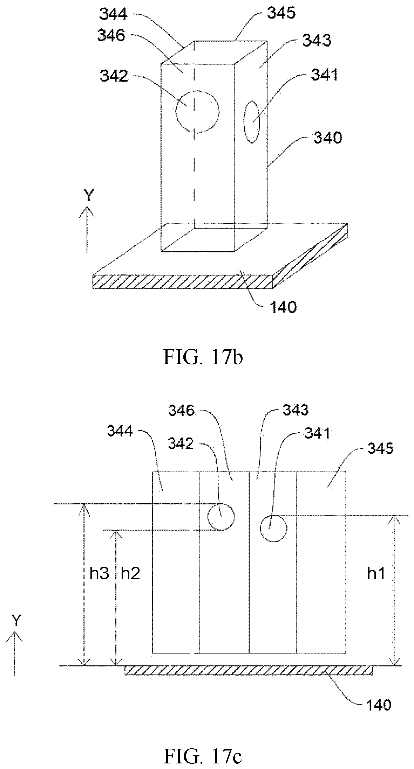

In an implementation, the chassis housing 100 further includes the top cover 130 and the bottom plate 140 that are disposed opposite to each other in the first direction Y (as shown in FIG. 1). The air guide housing 340 is located between the top cover 130 and the bottom plate 140. Refer to FIG. 17b and FIG. 17c. FIG. 17c is a schematic diagram of the unfolded air guide housing 340 in FIG. 17b. The air guide housing 340 includes the third air vent 341 and the fourth air vent 342. A maximum vertical distance h1 between an edge of the third air vent 341 and the bottom plate 140 is greater than a minimum vertical distance h2 between an edge of the fourth air vent 342 and the bottom plate 140, and is less than or equal to a maximum vertical distance h3 between an edge of the fourth air vent 342 and the bottom plate 140. In this way, the air can flow from the third air vent 341 to the fourth air vent 342, or flow from the fourth air vent 342 to the third air vent 341, to ensure adequate heat exchange and improve a circulation speed of the air. The first direction Y is a direction perpendicular to the bottom plate 140.

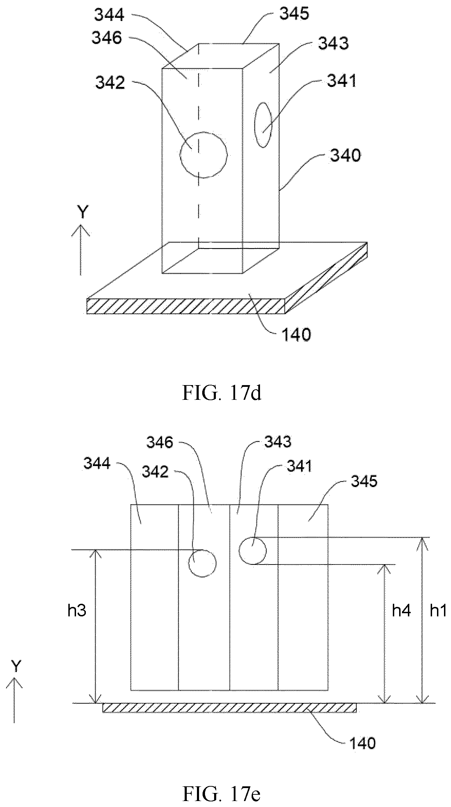

Refer to FIG. 17d and FIG. 17e. FIG. 17e is a schematic diagram of the unfolded air guide housing 340 in FIG. 17d. In an implementation, the maximum vertical distance h3 between the edge of the fourth air vent 342 and the bottom plate 140 is greater than a minimum vertical distance h4 between an edge of the third air vent 341 and the bottom plate 140, and is less than or equal to the maximum vertical distance h1 between the edge of the third air vent 341 and the bottom plate 140. The first direction Y is the direction perpendicular to the bottom plate 140.

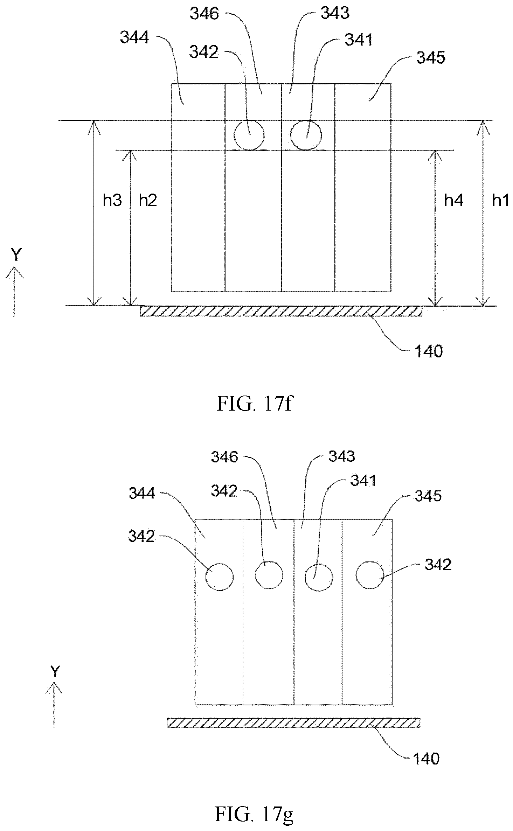

In an implementation, the vertical distance between the upper edge of the third air vent 341 and the bottom plate 140, and the vertical distance between the lower edge of the third air vent 341 and the bottom plate 140 are respectively equal to the vertical distance between the upper edge of the fourth air vent 342 and the bottom plate 140, and the vertical distance between the lower edge of the fourth air vent 342 and the bottom plate 140 (as shown in FIG. 17f). Specifically, the maximum vertical distance h1 between the edge of the third air vent 341 and the bottom plate 140 is equal to the maximum vertical distance h3 between the edge of the fourth air vent 342 and the bottom plate 140. The minimum vertical distance h4 between the edge of the third air vent 341 and the bottom plate 140 is equal to the minimum vertical distance h2 between the edge of the fourth air vent 342 and the bottom plate 140.

In an implementation, there are two fourth air vents 342 (as shown in FIG. 17a), and in an implementation, there are three fourth air vents 342 (as shown in FIG. 17g).

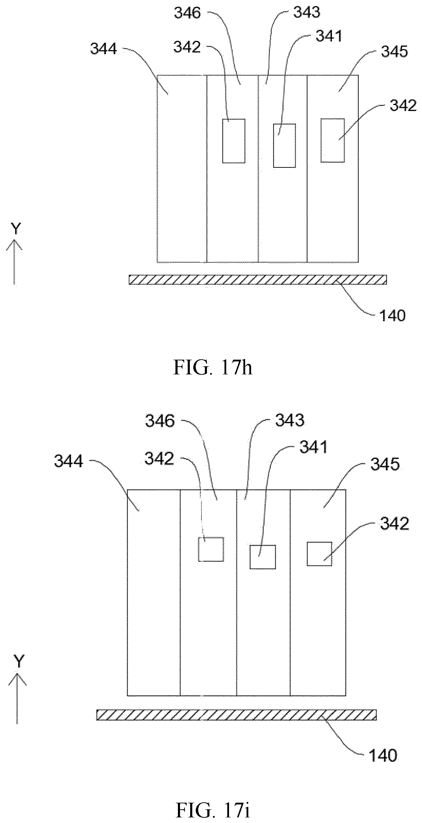

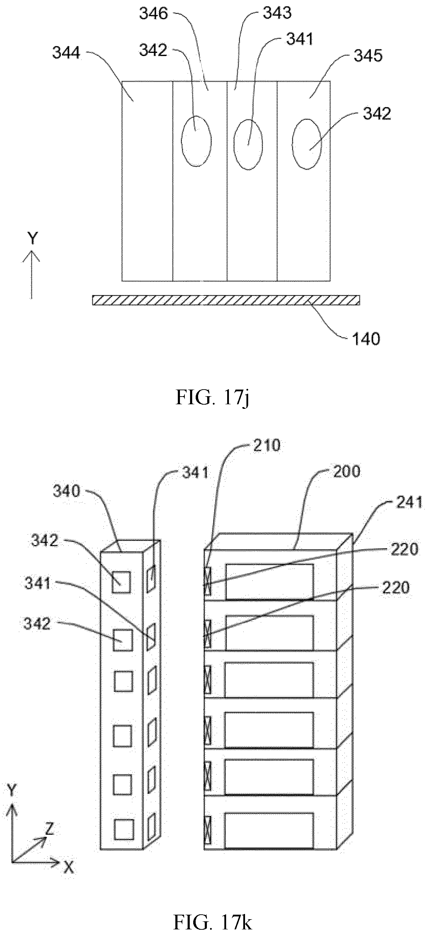

In an implementation, the third air vent 341 and the fourth air vent 342 are in shapes of rectangles, and length directions of the rectangles are the same as the first direction Y (as shown in FIG. 17h). In an implementation, the third air vent 341 and the fourth air vent 342 are in shapes of squares (as shown in FIG. 17i). In an implementation, the third air vent 341 and the fourth air vent 342 are in shapes of ellipses (as shown in FIG. 17j), and the like. In an implementation, when there are two or more fourth air vents 342, maximum vertical distances between upper edges of the fourth air vents 342 and the bottom plate 140 may be the same or different. Minimum vertical distances between lower edges of the fourth air vents 342 and the bottom plate 140 may be the same or different. Shapes of the fourth air vents 342 may be the same or different.

In an implementation, when the electric apparatus 200 includes the plurality of compartment housings 241 (as shown in FIG. 17k), a plurality of third air vents 341 are disposed on the air guide housing 340. Each of the third air vents 341 is disposed opposite to the first air vent 220 of one of the compartment housings 241, and at least one of the fourth air vents 342 and one of the third air vents 341 meet the foregoing vertical distance relationship. In an implementation, one third air vent 341 and one fourth air vent 342 that correspond to each compartment housing 241 are disposed on the air guide housing 340.

In an implementation, a water pan and a water pump are disposed at the bottom of the air guide housing 340. The water pan is configured to collect water drops condensed on the first heat exchanger 310. The water pump discharges water in the water pan out of the chassis housing 100.

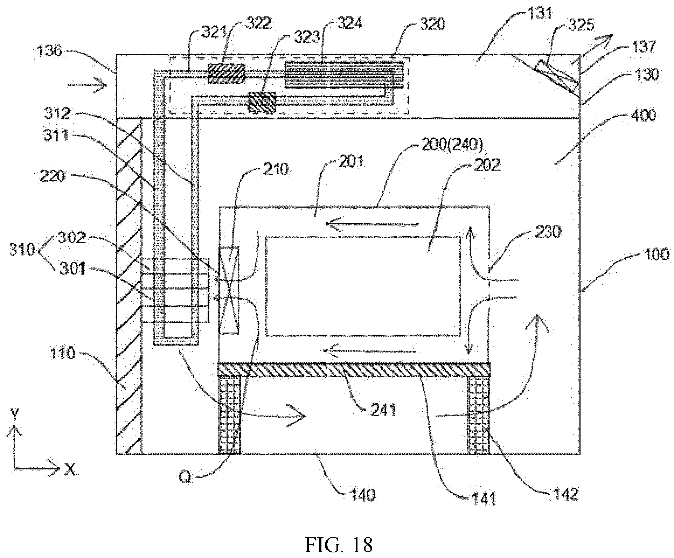

Refer to FIG. 18. In a possible implementation, the chassis housing 100 further includes the top cover 130 and the bottom plate 140 that are disposed opposite to each other in the first direction Y. The electric apparatus 200 is located on the bottom plate 140. Accommodation space 131 is disposed in the top cover 130, and the second heat exchanger 320 is located in the accommodation space 131. The second heat exchanger 320 is disposed in the top cover 130 to save space. The bottom plate 140 has a plurality of fastened support posts 142. A guide rail 141 is disposed on the fastened support posts 142. The electric apparatus 200 is located on the guide rail 141. When there are the plurality of electric apparatuses 200, there are the plurality of first heat exchangers 310 and the plurality of second heat exchangers 320. The plurality of second heat exchangers 320 are compactly disposed in the top cover 130, to reduce a size of the chassis 10. In another implementation, the second heat exchanger 320 may alternatively be disposed on a side housing body of the chassis housing 100 or disposed outside the chassis housing 100.

In an implementation, an inlet 311 and an outlet 312 of the first heat exchanger 310 are located at an end that is of the first heat exchanger 310 and that is close to the top cover 130. There may be a plurality of "S"-shaped loops between the inlet 311 and the outlet 312 of the first heat exchanger 310. Alternatively, there is a "U"-shaped loop between the inlet 311 and the outlet 312.

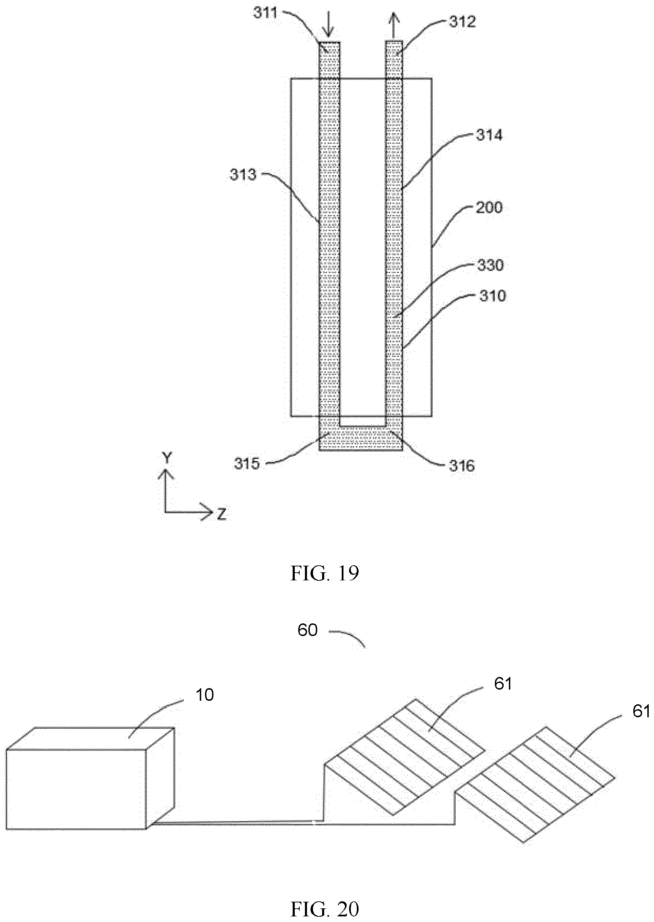

When there is the "U"-shaped loop between the inlet 311 and the outlet 312, the heat exchange uniformity for the electric apparatus 200 can be improved. The "U"-shaped first heat exchanger 310 includes a liquid inlet section 313 and a liquid outlet section 314 (as shown in FIG. 19). An inlet of the liquid inlet section 313 is the inlet 311 of the first heat exchanger 310. An outlet 315 of the liquid inlet section 313 communicates with an inlet 316 of the liquid outlet section 314. An outlet of the liquid outlet section 314 is the outlet 312 of the first heat exchanger 310. The outlet 315 of the liquid inlet section 313 and the inlet 316 of the liquid outlet section 314 are located at the bottom end of the "U"-shaped loop. When the heat control apparatus 300 is configured to dissipate heat from the electric apparatus 200, the cooled liquid heat exchange working substance 330 flows into the first heat exchanger 310 from the second heat exchanger 320. The liquid heat exchange working substance 330 enters from the inlet 311. For the liquid inlet section 313, a liquid content of the liquid heat exchange working substance 330 is large at a part close to the inlet 311 of the liquid inlet section 313, and there is less liquid heat exchange working substance at a part close to the outlet 315 of the liquid inlet section 313. In other words, the inlet 311 of the liquid inlet section 313 has better heat dissipation effect than the outlet 315 of the liquid inlet section 313. For the liquid outlet section 314, a liquid content of the liquid heat exchange working substance 330 is large at a part close to the inlet 316 of the liquid outlet section 314, and a liquid content of the liquid heat exchange working substance 330 is small at a part close to the outlet 312 of the liquid outlet section 314. In other words, the inlet 316 of the liquid outlet section 314 has better heat dissipation effect than the outlet 312 of the liquid outlet section 314. The inlet 316 of the liquid outlet section 314 is close to the outlet 315 of the liquid inlet section 313, and the outlet 312 of the liquid outlet section 314 is close to the inlet 311 of the liquid inlet section 313. In this way, the liquid inlet section 313 and the liquid outlet section 314 complement each other at both ends to achieve more uniform heat dissipation effect of the entire first heat exchanger 310 for the upper and lower parts of the electric apparatus 200.

When there are the plurality of "S"-shaped loops between the inlet 311 and the outlet 312, the plurality of "S"-shaped loops are equivalent to a plurality of "U"-shaped loops, and the heat dissipation uniformity of the first heat exchanger 310 for upper and lower parts of the electric apparatus 200 can also be improved.

Still refer to FIG. 10. In a possible implementation, the duct 303 further includes a first communicating pipe 350 and a second communicating pipe 360. The first communicating pipe 350 is connected between the inlet of the first heat exchanger 310 and an outlet of the second heat exchanger 320, and communicates with both the first heat exchanger 310 and the second heat exchanger 320. The second communicating pipe 360 is connected between the outlet of the first heat exchanger 310 and the inlet of the second heat exchanger 320, and communicates with both the first heat exchanger 310 and the second heat exchanger 320. When the first heat exchanger 310 is disposed on the first side panel 110, the first side panel 110 can be smoothly opened by using the first communicating pipe 350 and the second communicating pipe 360. In an implementation, the first communicating pipe 350 and the second communicating pipe 360 are communicating pipes that are elastic and that can stretch out and draw back, or the first communicating pipe 350 and the second communicating pipe 360 are of specific lengths, so that the first side panel 110 can be opened more smoothly.

Still refer to FIG. 18. In an implementation, the second heat exchanger 320 includes a second heat exchange pipe 321, a compressor 322, an expansion valve 323, a heat exchange component 324, and an outdoor unit fan 325. The compressor 322, the heat exchange component 324, and the expansion valve 323 are sequentially connected between the inlet 311 of the first heat exchanger 310 and the outlet 312 of the first heat exchanger 310. There is a part of the second heat exchange pipe 321 between the compressor 322 and the heat exchange component 324. There is a part of the second heat exchange pipe 321 between the heat exchange component 324 and the expansion valve 323. The compressor 322, the heat exchange component 324, and the expansion valve 323 communicate with the second heat exchange pipe 321. The heat exchange working substance 330 flows in the second heat exchange pipe 321, the compressor 322, the expansion valve 323, and the heat exchange component 324. The outdoor unit fan 325 is configured to drive external circulation between internal space of the top cover 130 and the external of a chassis housing 100. The top cover 130 includes an air inlet 136 and an air outlet 137. After the outdoor unit fan 325 drives external air to enter from the air inlet 136, the external air exchanges heat with the heat exchange component 324. Then, the external air is discharged from the top cover 130 through the air outlet 137. In this way, the external circulation between the internal space of the top cover 130 and the external of the chassis housing 100 is implemented. Still refer to FIG. 18. When the heat exchange component 324 is a condenser, the condenser is configured to cool the heat exchange working substance 330 in the second heat exchange pipe 321. When the heat control apparatus 300 cools the electric apparatus 200, the heat exchange working substance 330 in the first heat exchanger 310 is low-pressure and low-temperature liquid. The low-pressure and low-temperature liquid has a low boiling point and can absorb heat quickly. The fan 210 in the electric apparatus 200 drives the internal hot air Q to flow from the first air vent 220 to a surface of the first heat exchanger 310. The low-pressure and low-temperature liquid heat exchange working substance 330 absorbs heat of the hot air Q and becomes the low-pressure and low-temperature gaseous heat exchange working substance 330. The low-pressure and low-temperature gaseous heat exchange working substance 330 flows from the outlet 312 of the first heat exchanger 310 to the second heat exchange pipe 321, and then flows to the compressor 322. The compressor 322 converts the low-pressure and low-temperature gaseous heat exchange working substance 330 into the high-temperature and high-pressure gaseous heat exchange working substance 330. Then, the high-temperature and high-pressure gaseous heat exchange working substance 330 flows into the heat exchange component (the condenser) 324 through the part of the second heat exchange pipe 321. The high-temperature and high-pressure gaseous heat exchange working substance 330 may be a gas with a temperature and pressure that are higher than those of external air. In this case, the outdoor unit fan 325 may be used to drive the external air to cool the high-temperature and high-pressure gaseous heat exchange working substance 330 in the heat exchange component (the condenser) 324. The high-temperature and high-pressure gaseous heat exchange working substance 330 is cooled by the heat exchange component (the condenser) 324 to form the moderate-temperature and high-pressure liquid heat exchange working substance 330. Then, the moderate-temperature and high-pressure liquid heat exchange working substance 330 enters the expansion valve 323 through the part of the second heat exchange pipe 321, and passes through the expansion valve 323 to form the low-temperature and low-pressure liquid heat exchange working substance 330. The low-temperature and low-pressure liquid heat exchange working substance 330 flows back to the first heat exchanger 310, to continue to cool the electric apparatus 200.

The second heat exchanger 320 performs the heat exchange on the heat exchange working substance 330 in the first heat exchanger 310, so that the heat exchange working substance 330 forms a thermodynamic cycle between the first heat exchanger 310 and the second heat exchanger 320. In this implementation, the second heat exchanger 320 has the compressor 322 and the expansion valve 323, so that a temperature of the heat exchange working substance 330 can be reduced low. When the low-temperature heat exchange working substance 330 exchanges heat with air in the air flow circulation channel 20 by using the first heat exchanger 310 to cool the electric apparatus 200, this enables a temperature of the electric apparatus 200 to be lower than a temperature outside the chassis housing 100. In this way, cooling effect for the electric apparatus 200 is improved. When the heat control apparatus 300 is used to heat up the electric apparatus 200, the second heat exchanger 320 in this implementation may also be used to enable the temperature of the electric apparatus 200 to be higher than the temperature outside the chassis housing 10. In this way, temperature raising effect for the electric apparatus 200 is improved.

In another implementation, the second heat exchanger 320 may further include another component, for example, an air filter, and the like, and is not limited to the structural component described in FIG. 18. The second heat exchanger 320 may also be formed of another structure, provided that the heat exchange can be performed on the heat exchange working substance 330 in the first heat exchanger 310.

Refer to FIG. 20. An implementation of this application further provides an energy storage system 60. The energy storage system 60 includes a power generation component 61 and the chassis 10 according to any one of the foregoing implementations. The chassis 10 is an energy storage container. The power generation component 61 is configured to generate electric energy, and the electric energy is stored in the chassis 10. The power generation component 61 includes but is not limited to a solar power generation apparatus, a wind power generation apparatus, or a hydroelectric power generation apparatus.

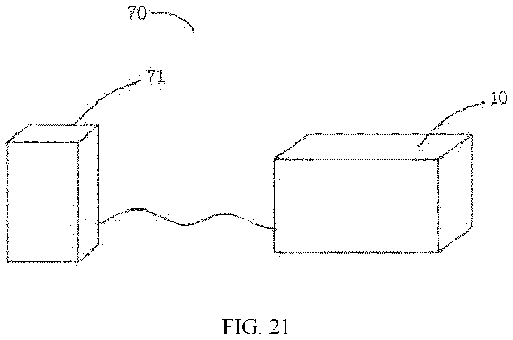

Refer to FIG. 21. An implementation of this application further provides a data system 70. The data system includes a power supply component 71 and the chassis 10 according to any one of the foregoing implementations. The chassis 10 is a data center or a cabinet, and the power supply component 71 is configured to provide electric energy for the chassis 10.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A chassis (10), wherein the chassis (10) comprises a chassis housing(100), an electric apparatus (200), and a heat control apparatus (300), the electric apparatus (200) is located in an accommodation cavity (400) in the chassis housing (100), the electric apparatus (200) comprises a plurality of compartment housings (241) that are stacked and an electric component (202) located in the compartment housing (241), the compartment housing (241) comprises a first air vent (220) and a second air vent (230), and the first air vent (220), internal space of the electric apparatus (200), the second air vent (230), and the accommodation cavity (400) form an air flow circulation channel (20), and a fan (210) is located in the air flow circulation channel (20), and the fan (210) is configured to accelerate a speed at which an air flow flows between the first air vent (220) and the second air vent (230);
the heat control apparatus (300) comprises a first heat exchanger (310), a second heat exchanger (320), and heat exchange working substance (330), the first heat exchanger (310) communicates with the second heat exchanger (320) by using a duct, the heat exchange working substance (330) is located in the first heat exchanger (310) and the second heat exchanger (320), and can flow between a first heat exchange pipe (301) and a second heat exchange pipe (321), the first heat exchanger (310) and the second heat exchanger (320) implement heat exchange inside and outside the chassis housing(100) by using a thermodynamic cycle of the heat exchange working substance (330), and the first heat exchanger (310) is located in the accommodation cavity (400) and is close to the first air vent (220);
in each compartment housing (241), the first heat exchanger is disposed on an outer side of the first air vent (220), and at least a part of the first heat exchanger is opposite to the first air vent (220).

2. The chassis according to claim 1, wherein the chassis housing (100) further comprises a top cover (130) and a bottom plate (140) that are disposed opposite to each other in a first direction, the electric apparatus (200) is located in a region between the top cover (130) and the bottom plate (140), and a direction in which the plurality of compartment housings (241) are stacked is the first direction.

3. The chassis (10) according to claim 2, wherein accommodation space (131) is disposed in the top cover (130), and the second heat exchanger (320) is located in the accommodation space (131).

4. The chassis (10) according to any one of claims 1 to 3, wherein the chassis housing (100) comprises a first side panel (110), the first air vent (220) faces the first side panel (110), and the first heat exchanger (310) is located between the first side panel and the first air vent (220), and is fastened to an inner surface that is of the first side panel (110) and that faces the electric apparatus (200).

5. The chassis (10) according to any one of claims 1 to 3, wherein the chassis housing (100) comprises a first side panel (110), the first side panel (110) is located on a side of the electric apparatus (200) in a second direction, the first air vent (220) and the second air vent (230) are disposed opposite to each other in the second direction, the first side panel (110) is disposed closer to the second air vent (230) than to the first air vent (220), and the first heat exchanger (310) is fastened to an outer side of the electric apparatus (200).

6. The chassis (10) according to any one of claims 1 to 5, wherein the duct further comprises a first communicating pipe (350) and a second communicating pipe (360), the first communicating pipe (350) is connected between an inlet of the first heat exchanger (310) and an outlet of the second heat exchanger (320), and communicates with both the first heat exchanger (310) and the second heat exchanger (320), and the second communicating pipe (360) is connected between an outlet (312) of the first heat exchanger (310) and an inlet of the second heat exchanger (320), and communicates with both the first heat exchanger (310) and the second heat exchanger (320).

7. The chassis according to any one of claims 1 to 6, wherein the chassis (10) comprises a plurality of electric apparatuses (200) arranged in a row, the heat control apparatus (300) comprises a plurality of first heat exchangers, and one first heat exchanger (310) is disposed at the first air vent (220) of each of the plurality of electric apparatuses (200).

8. The chassis (10) according to claim 7, wherein the chassis housing (100) further comprises the top cover (130) and the bottom plate (140) that are disposed opposite to each other in the first direction, the electric apparatus (200) is located in a region between the top cover (130) and the bottom plate (140), and a direction in which the plurality of electric apparatuses (200) are arranged intersects the first direction.

9. The chassis (10) according to any one of claims 1 to 8, wherein the heat control apparatus (300) further comprises an air guide housing (340), the air guide housing (340) and the first heat exchanger (310) are located on a same side of the electric apparatus (200) in the second direction, the air guide housing (340) and the first heat exchanger (310) extend in the first direction, the second direction intersects the first direction, the first heat exchanger (310) is located in the air guide housing (340), a third air vent (341) and a fourth air vent (342) are disposed on the air guide housing (340), the third air vent (341) is disposed closer to the first air vent (220) than the fourth air vent (342) and faces the first air vent (220), the third air vent (341) and the first air vent (220) are configured to communicate internal space of the air guide housing (340) with the internal space of the electric apparatus (200), and the fourth air vent (342) is configured to communicate the internal space of the air guide housing (340) with the accommodation cavity (400).

10. The chassis (10) according to claim 9, wherein the chassis housing (100) further comprises the top cover (130) and the bottom plate (140) that are disposed opposite to each other in the first direction, the air guide housing (340) is located between the top cover (130) and the bottom plate (140), the air guide housing (340) comprises the third air vent (341) and the fourth air vent (342), and a maximum vertical distance between an edge of the third air vent (341) and the bottom plate (140) is greater than a minimum vertical distance between an edge of the fourth air vent (342) and the bottom plate (140), and is less than or equal to a maximum vertical distance between an edge of the fourth air vent (342) and the bottom plate (140); or
the maximum vertical distance between the edge of the fourth air vent (342) and the bottom plate (140) is greater than a minimum vertical distance between an edge of the third air vent (341) and the bottom plate (140), and is less than or equal to the maximum vertical distance between the edge of the third air vent (341) and the bottom plate (140), and the first direction is a direction perpendicular to the bottom plate (140).

11. An energy storage system, wherein the energy storage system comprises a power generation component (61) and the chassis (10) according to any one of claims 1 to 10, the chassis (10) is an energy storage container, the power generation component (61) is configured to generate electric energy, and the electric energy is stored in the chassis (10).

12. A data system, wherein the data system comprises a power supply component (71) and the chassis (10) according to any one of claims 1 to 10, the chassis (10) is a data center or a cabinet, and the power supply component (71) is configured to provide electric energy for the chassis (10).

## Patentansprüche

1. Chassis (10), wobei das Chassis (10) ein Chassisgehäuse (100), eine elektrische Vorrichtung (200) und eine Wärmesteuerungsvorrichtung (300) umfasst, sich die elektrische Vorrichtung (200) in einem Aufnahmehohlraum (400) in dem Chassisgehäuse (100) befindet, die elektrische Vorrichtung (200) eine Vielzahl von Fachgehäusen (241), die gestapelt sind, und eine elektrische Komponente (202), die sich in dem Fachgehäuse (241) befindet, umfasst, das Fachgehäuse (241) eine erste Entlüftung (220) und eine zweite Entlüftung (230) umfasst, und die erste Entlüftung (220), der Innenraum der elektrischen Vorrichtung (200), die zweite Entlüftung (230) und der Aufnahmehohlraum (400) einen Luftstromzirkulationskanal (20) bilden, und sich ein Gebläse (210) in dem Luftstromzirkulationskanal (20) befindet, und das Gebläse (210) dazu konfiguriert ist, eine Geschwindigkeit zu beschleunigen, mit der ein Luftstrom zwischen der ersten Entlüftung (220) und der zweiten Entlüftung (230) fließt;
die Wärmesteuerungsvorrichtung (300) einen ersten Wärmetauscher (310), einen zweiten Wärmetauscher (320) und einen Wärmeaustausch-Arbeitsstoff (330) umfasst, der erste Wärmetauscher (310) mit dem zweiten Wärmetauscher (320) unter Verwendung eines Kanals in Verbindung steht, sich der Wärmeaustausch-Arbeitsstoff (330) in dem ersten Wärmetauscher (310) und dem zweiten Wärmetauscher (320) befindet, und zwischen einem ersten Wärmetauscherrohr (301) und einem zweiten Wärmetauscherrohr (321) fließen kann, der erste Wärmetauscher (310) und der zweite Wärmetauscher (320) einen Wärmeaustausch innerhalb und außerhalb des Chassisgehäuses (100) unter Verwendung eines thermodynamischen Zyklus des Wärmeaustausch-Arbeitsstoffs (330) implementieren und sich der erste Wärmetauscher (310) in dem Aufnahmehohlraum (400) und in der Nähe der ersten Entlüftung (220) befindet;
in jedem Fachgehäuse (241) der erste Wärmetauscher an einer Außenseite der ersten Entlüftung (220) angeordnet ist und mindestens ein Teil des ersten Wärmetauschers der ersten Entlüftung (220) gegenüberliegt.

2. Chassis nach Anspruch 1, wobei das Chassisgehäuse (100) ferner eine obere Abdeckung (130) und eine Bodenplatte (140) umfasst, die in einer ersten Richtung einander gegenüberliegend angeordnet sind, sich die elektrische Vorrichtung (200) in einem Bereich zwischen der oberen Abdeckung (130) und der Bodenplatte (140) befindet und eine Richtung, in der die Vielzahl von Fachgehäusen (241) gestapelt sind, die erste Richtung ist.

3. Chassis (10) nach Anspruch 2, wobei ein Aufnahmeraum (131) in der oberen Abdeckung (130) angeordnet ist und sich der zweite Wärmetauscher (320) in dem Aufnahmeraum (131) befindet.

4. Chassis (10) nach einem der Ansprüche 1 bis 3, wobei das Chassisgehäuse (100) ein erstes Seitenpaneel (110) umfasst, die erste Entlüftung (220) dem ersten Seitenpaneel (110) zugewandt ist und sich der erste Wärmetauscher (310) zwischen dem ersten Seitenpaneel und der ersten Entlüftung (220) befindet und an einer inneren Oberfläche des ersten Seitenpaneels (110) befestigt ist, die der elektrischen Vorrichtung (200) zugewandt ist.

5. Chassis (10) nach einem der Ansprüche 1 bis 3, wobei das Chassisgehäuse (100) ein erstes Seitenpaneel (110) umfasst, wobei sich das erste Seitenpaneel (110) auf einer Seite der elektrischen Vorrichtung (200) in einer zweiten Richtung befindet, die erste Entlüftung (220) und die zweite Entlüftung (230) in der zweiten Richtung einander gegenüberliegend angeordnet sind, das erste Seitenpaneel (110) näher an der zweiten Entlüftung (230) als an der ersten Entlüftung (220) angeordnet ist und der erste Wärmetauscher (310) an einer Außenseite der elektrischen Vorrichtung (200) befestigt ist.

6. Chassis (10) nach einem der Ansprüche 1 bis 5, wobei der Kanal ferner ein erstes Verbindungsrohr (350) und ein zweites Verbindungsrohr (360) umfasst, wobei das erste Verbindungsrohr (350) zwischen einem Einlass des ersten Wärmetauschers (310) und einem Auslass des zweiten Wärmetauschers (320) angeschlossen ist und sowohl mit dem ersten Wärmetauscher (310) als auch mit dem zweiten Wärmetauscher (320) in Verbindung steht, und das zweite Verbindungsrohr (360) zwischen einem Auslass (312) des ersten Wärmetauschers (310) und einem Einlass des zweiten Wärmetauschers (320) angeschlossen ist und sowohl mit dem ersten Wärmetauscher (310) als auch mit dem zweiten Wärmetauscher (320) in Verbindung steht.

7. Chassis nach einem der Ansprüche 1 bis 6, wobei das Chassis (10) eine Vielzahl von elektrischen Vorrichtungen (200) umfasst, die in einer Reihe angeordnet sind, die Wärmesteuerungsvorrichtung (300) eine Vielzahl von ersten Wärmetauschern umfasst und ein erster Wärmetauscher (310) an der ersten Entlüftung (220) von jeder der Vielzahl von elektrischen Vorrichtungen (200) angeordnet ist.

8. Chassis (10) nach Anspruch 7, wobei das Chassisgehäuse (100) ferner die obere Abdeckung (130) und die Bodenplatte (140) umfasst, die in der ersten Richtung einander gegenüberliegend angeordnet sind, sich die elektrische Vorrichtung (200) in einem Bereich zwischen der oberen Abdeckung (130) und der Bodenplatte (140) befindet und eine Richtung, in der die Vielzahl von elektrischen Vorrichtungen (200) angeordnet sind, die erste Richtung schneidet.

9. Chassis (10) nach einem der Ansprüche 1 bis 8, wobei die Wärmesteuerungsvorrichtung (300) ferner ein Luftführungsgehäuse (340) umfasst, das Luftführungsgehäuse (340) und der erste Wärmetauscher (310) auf derselben Seite der elektrischen Vorrichtung (200) in der zweiten Richtung angeordnet sind, sich das Luftführungsgehäuse (340) und der erste Wärmetauscher (310) in der ersten Richtung erstrecken, die zweite Richtung die erste Richtung schneidet, sich der erste Wärmetauscher (310) in dem Luftführungsgehäuse (340) befindet, eine dritte Entlüftung (341) und eine vierte Entlüftung (342) an dem Luftführungsgehäuse (340) angeordnet sind, die dritte Entlüftung (341) näher an der ersten Entlüftung (220) angeordnet ist als die vierte Entlüftung (342) und der ersten Entlüftung (220) gegenüberliegt, die dritte Entlüftung (341) und die erste Entlüftung (220) dazu konfiguriert sind, den Innenraum des Luftführungsgehäuses (340) mit dem Innenraum der elektrischen Vorrichtung (200) zu verbinden und die vierte Entlüftung (342) dazu konfiguriert ist, den Innenraum des Luftführungsgehäuses (340) mit dem Aufnahmehohlraum (400) zu verbinden.

10. Chassis (10) nach Anspruch 9, wobei das Chassisgehäuse (100) ferner die obere Abdeckung (130) und die Bodenplatte (140) umfasst, die in der ersten Richtung einander gegenüberliegend angeordnet sind, sich das Luftführungsgehäuse (340) zwischen der oberen Abdeckung (130) und der Bodenplatte (140) befindet, das Luftführungsgehäuse (340) die dritte Entlüftung (341) und die vierte Entlüftung (342) umfasst, und ein maximaler vertikaler Abstand zwischen einer Kante der dritten Entlüftung (341) und der Bodenplatte (140) größer ist als ein minimaler vertikaler Abstand zwischen einer Kante der vierten Entlüftung (342) und der Bodenplatte (140) und kleiner als oder gleich einem maximalen vertikalen Abstand zwischen einer Kante der vierten Entlüftung (342) und der Bodenplatte (140) ist; oder
der maximale vertikale Abstand zwischen der Kante der vierten Entlüftung (342) und der Bodenplatte (140) größer ist als ein minimaler vertikaler Abstand zwischen einer Kante der dritten Entlüftung (341) und der Bodenplatte (140) und kleiner oder gleich dem maximalen vertikalen Abstand zwischen der Kante der dritten Entlüftung (341) und der Bodenplatte (140) ist, und die erste Richtung eine Richtung senkrecht zu der Bodenplatte (140) ist.

11. Energiespeichersystem, wobei das Energiespeichersystem eine Energieerzeugungskomponente (61) und das Chassis (10) nach einem der Ansprüche 1 bis 10 umfasst, das Chassis (10) ein Energiespeicherbehälter ist, die Energieerzeugungskomponente (61) dazu konfiguriert ist, elektrische Energie zu erzeugen, und die elektrische Energie in dem Chassis (10) gespeichert wird.

12. Datensystem, wobei das Datensystem eine Stromversorgungskomponente (71) und das Chassis (10) nach einem der Ansprüche 1 bis 10 umfasst, das Chassis (10) ein Rechenzentrum oder ein Schrank ist und die Stromversorgungskomponente (71) dazu konfiguriert ist, elektrische Energie für das Chassis (10) bereitzustellen.

## Revendications

1. Châssis (10), dans lequel le châssis (10) comprend un boîtier de châssis (100), un appareil électrique (200), et un appareil de régulation thermique (300), l'appareil électrique (200) est situé dans une cavité de logement (400) dans le boîtier de châssis (100), l'appareil électrique (200) comprend une pluralité de boîtiers de compartiment (241) qui sont empilés et un composant électrique (202) situé dans le boîtier de compartiment (241), le boîtier de compartiment (241) comprend un premier évent d'air (220) et un deuxième évent d'air (230), et le premier évent d'air (220), l'espace interne de l'appareil électrique (200), le deuxième évent d'air (230), et la cavité de logement (400) forment un canal de circulation de flux d'air (20), et un ventilateur (210) est situé dans le canal de circulation de flux d'air (20), et le ventilateur (210) est configuré pour accélérer une vitesse à laquelle un flux d'air s'écoule entre le premier évent d'air (220) et le deuxième évent d'air (230) ;
l'appareil de régulation thermique (300) comprend un premier échangeur de chaleur (310), un second échangeur de chaleur (320), et une substance active d'échange de chaleur (330), le premier échangeur de chaleur (310) communique avec le second échangeur de chaleur (320) à l'aide d'un conduit, la substance active d'échange de chaleur (330) est située dans le premier échangeur de chaleur (310) et le second échangeur de chaleur (320) et peut s'écouler entre un premier tuyau d'échange de chaleur (301) et un second tuyau d'échange de chaleur (321), le premier échangeur de chaleur (310) et le second échangeur de chaleur (320) mettent en œuvre l'échange de chaleur à l'intérieur et à l'extérieur du boîtier de châssis (100) à l'aide d'un cycle thermodynamique de la substance active d'échange de chaleur (330), et le premier échangeur de chaleur (310) est situé dans la cavité de logement (400) et est proche du premier évent d'air (220) ;
dans chaque boîtier de compartiment (241), le premier échangeur de chaleur est disposé sur un côté extérieur du premier évent d'air (220), et au moins une partie du premier échangeur de chaleur est opposée au premier évent d'air (220).

2. Châssis selon la revendication 1, dans lequel le boîtier de châssis (100) comprend également un couvercle supérieur (130) et une plaque inférieure (140) qui sont disposés l'un en face de l'autre dans une première direction, l'appareil électrique (200) est situé dans une région entre le couvercle supérieur (130) et la plaque inférieure (140), et une direction dans laquelle la pluralité de boîtiers de compartiment (241) sont empilés est la première direction.

3. Châssis (10) selon la revendication 2, dans lequel l'espace de logement (131) est disposé dans le couvercle supérieur (130), et le second échangeur de chaleur (320) est situé dans l'espace de logement (131).

4. Châssis (10) selon l'une quelconque des revendications 1 à 3, dans lequel le boîtier de châssis (100) comprend un premier panneau latéral (110), le premier évent d'air (220) fait face au premier panneau latéral (110), et le premier échangeur de chaleur (310) est situé entre le premier panneau latéral et le premier évent d'air (220), et est fixé à une surface intérieure qui est du premier panneau latéral (110) et qui fait face à l'appareil électrique (200).

5. Châssis (10) selon l'une quelconque des revendications 1 à 3, dans lequel le boîtier de châssis (100) comprend un premier panneau latéral (110), le premier panneau latéral (110) est situé sur un côté de l'appareil électrique (200) dans une seconde direction, le premier évent d'air (220) et le deuxième évent d'air (230) sont disposés l'un en face de l'autre dans la seconde direction, le premier panneau latéral (110) est disposé plus près du deuxième évent d'air (230) que du premier évent d'air (220), et le premier échangeur de chaleur (310) est fixé sur un côté extérieur de l'appareil électrique (200).

6. Châssis (10) selon l'une quelconque des revendications 1 à 5, dans lequel le conduit comprend également un premier tuyau de communication (350) et un second tuyau de communication (360), le premier tuyau de communication (350) est connecté entre une entrée du premier échangeur de chaleur (310) et une sortie du second échangeur de chaleur (320), et communique avec à la fois le premier échangeur de chaleur (310) et le second échangeur de chaleur (320), et le second tuyau de communication (360) est connecté entre une sortie (312) du premier échangeur de chaleur (310) et une entrée du second échangeur de chaleur (320), et communique avec à la fois le premier échangeur de chaleur (310) et le second échangeur de chaleur (320).

7. Châssis selon l'une quelconque des revendications 1 à 6, dans lequel le châssis (10) comprend une pluralité d'appareils électriques (200) disposés en rangée, l'appareil de régulation thermique (300) comprend une pluralité de premiers échangeurs de chaleur, et un premier échangeur de chaleur (310) est disposé au niveau du premier évent d'air (220) de chacun de la pluralité d'appareils électriques (200).

8. Châssis (10) selon la revendication 7, dans lequel le boîtier de châssis (100) comprend également le couvercle supérieur (130) et la plaque inférieure (140) qui sont disposés l'un en face de l'autre dans la première direction, l'appareil électrique (200) est situé dans une région entre le couvercle supérieur (130) et la plaque inférieure (140), et une direction dans laquelle la pluralité d'appareils électriques (200) sont disposés croise la première direction.

9. Châssis (10) selon l'une quelconque des revendications 1 à 8, dans lequel l'appareil de régulation thermique (300) comprend également un boîtier de guidage d'air (340), le boîtier de guidage d'air (340) et le premier échangeur de chaleur (310) sont situés sur un même côté de l'appareil électrique (200) dans la seconde direction, le boîtier de guidage d'air (340) et le premier échangeur de chaleur (310) se prolongent dans la première direction, la seconde direction croise la première direction, le premier échangeur de chaleur (310) est situé dans le boîtier de guidage d'air (340), un troisième évent d'air (341) et un quatrième évent d'air (342) sont disposés sur le boîtier de guidage d'air (340), le troisième évent d'air (341) est disposé plus près du premier évent d'air (220) que le quatrième évent d'air (342) et fait face au premier évent d'air (220), le troisième évent d'air (341) et le premier évent d'air (220) sont configurés pour communiquer l'espace interne du boîtier de guidage d'air (340) avec l'espace interne de l'appareil électrique (200), et le quatrième évent d'air (342) est configuré pour communiquer l'espace interne du boîtier de guidage d'air (340) avec la cavité de logement (400).

10. Châssis (10) selon la revendication 9, dans lequel le boîtier de châssis (100) comprend également le couvercle supérieur (130) et la plaque inférieure (140) qui sont disposés l'un en face de l'autre dans la première direction, le boîtier de guidage d'air (340) est situé entre le couvercle supérieur (130) et la plaque inférieure (140), le boîtier de guidage d'air (340) comprend le troisième évent d'air (341) et le quatrième évent d'air (342), et une distance verticale maximale entre un bord du troisième évent d'air (341) et la plaque inférieure (140) est supérieure à la distance verticale minimale entre un bord du quatrième évent d'air (342) et la plaque inférieure (140), et est inférieure ou égale à une distance verticale maximale entre un bord du quatrième évent d'air (342) et la plaque inférieure (140) ; ou
la distance verticale maximale entre le bord du quatrième évent d'air (342) et la plaque inférieure (140) est supérieure à une distance verticale minimale entre un bord du troisième évent d'air (341) et la plaque inférieure (140), et est inférieure ou égale à la distance verticale maximale entre le bord du troisième évent d'air (341) et la plaque inférieure (140), et la première direction est une direction perpendiculaire à la plaque inférieure (140).

11. Système de stockage d'énergie, dans lequel le système de stockage d'énergie comprend un composant de production d'énergie (61) et le châssis (10) selon l'une quelconque des revendications 1 à 10, le châssis (10) est un conteneur de stockage d'énergie, le composant de production d'énergie (61) est configuré pour produire de l'énergie électrique, et l'énergie électrique est stockée dans le châssis (10).

12. Système de données, dans lequel le système de données comprend un composant d'alimentation électrique (71) et le châssis (10) selon l'une quelconque des revendications 1 à 10, le châssis (10) est un centre de données ou une armoire, et le composant d'alimentation électrique (71) est configuré pour fournir de l'énergie électrique au châssis (10).
